# EUROPEAN PATENT APPLICATION

(11) **EP 4 618 487 A1**
(43) Date of publication of application: **17.09.2025**
(21) Application number: 22966088.1
(22) Date of filing: 22.11.2022
(51) Int. Cl.: H04L 27/00

(54) **BEAMFORMING DEVICE AND METHOD**

(71) Applicant: Huawei Technologies Co., Ltd., Shenzhen, Guangdong 518129 (CN)
(72) Inventor: YIN, Yanlong, Shenzhen, Guangdong 518129 (CN); GUO, Yuhao, Shenzhen, Guangdong 518129 (CN); GU, Zenghui, Shenzhen, Guangdong 518129 (CN); DUAN, Fei, Shenzhen, Guangdong 518129 (CN); CHEN, Teyan, Shenzhen, Guangdong 518129 (CN)
(74) Representative: Thun, Clemens
(86) International application number: PCT/CN2022/133533
(87) International publication number: WO 2024/108388

(57) **Abstract**

A beamforming apparatus and method are provided, to implement fully connected beamforming by using a wavelength division multiplexing technology. In a manner, in this application, radio frequency signals are modulated on laser signals with different wavelengths, and then after combination and splitting, phase adjustment is selectively performed on the radio frequency signals with the different wavelengths on paths through wavelength selection units, to change transmit angles of beams transmitted at antenna ends. In another manner, in this application, radio frequency signals are modulated on laser signals with different wavelengths, each path of optical signal in the modulated radio frequency signal is split into a plurality of paths for phase adjustment, and then the phase-adjusted signals are combined and sent, to change transmit angles of beams transmitted at antenna ends. In addition, the solutions provided in this application are applicable to direct modulation and direct detection, and are also applicable to heterodyne or homodyne coherent detection.

## Description

### TECHNICAL FIELD

This application relates to the field of optical communication technologies, and in particular, to a beamforming apparatus and method.

### BACKGROUND

In a wireless communication network, a beamforming technology has become a very key technology, and is used to improve a signal-to-noise ratio, a transmission distance, and the like of a link signal. A current mainstream technical solution is to use an electrical device to perform phase control, to implement a beamforming function. The solution is, for example, a digital phase shifting solution, an analog phase shifting solution, or a hybrid phase shifting solution of a baseband chip.

With development of wireless communication technologies, a wireless frequency band is gradually shifting toward a higher frequency band, and a requirement for signal capacity is increased, leading to an increase in a quantity of antennas. Currently, a subarray-based design solution is used to meet a requirement for increased antenna data. However, in the subarray-based design solution, power consumption is high, and a quantity of antennas allocated to each subarray is limited. Consequently, it is difficult to obtain a high-quality beam.

### SUMMARY

Embodiments of this application provide a beamforming apparatus and method, to implement fully connected beamforming by using a wavelength division multiplexing technology.

According to a first aspect, an embodiment of this application provides a beamforming apparatus. The apparatus includes a first laser signal source, a plurality of modulators, a first optical splitting device, a plurality of wavelength selection units, and a plurality of phase shifters. The laser signal source is configured to transmit a plurality of laser signals with different wavelengths. The plurality of modulators respectively modulate to-be-sent radio frequency signals on the laser signals with the corresponding wavelengths to obtain first modulated optical signals. The first optical splitting device combines the plurality of first modulated optical signals, and then distributes the combined first modulated optical signals to a plurality of optical paths. Each optical path corresponds to a second modulated optical signal. Each optical path corresponds to one wavelength selection unit. The wavelength selection unit receives, on the corresponding optical path, the second modulated optical signal from the first optical splitting device, and selectively transmits an optical signal with a corresponding wavelength in the received second modulated optical signal to a phase shifter. Each of the plurality of phase shifters performs phase shifting (that is, phase adjustment) on a received optical signal with a corresponding wavelength, and then transmits the optical signal to a corresponding connected wavelength selection unit. The wavelength selection unit receives optical signals with a plurality of wavelengths from a plurality of phase shifters, and fuses the optical signals to obtain a third modulated optical signal for transmission.

In this embodiment of this application, a full-connection method of light is used, to implement effective routing of light through wavelength multiplexing and mode multiplexing, so as to implement expansion of a traffic channel. In addition, a quantity of used modulators is only related to a quantity of full connections, and complexity is low, which can reduce a size of the beamforming apparatus to some extent. In addition, lasers with different wavelengths are used to correspondingly transmit beam signals at different antenna ends, so that frequencies of radio frequency signals do not need to be adjusted; and phase shifting is performed on a signal with a corresponding wavelength on each path through a phase shifter, so that a transmit angle of the radio frequency signal that is transmitted at a radio frequency antenna end and that is modulated at the wavelength can be changed. In this way, beamforming of each radio frequency signal is implemented.

In some possible implementations, the beamforming apparatus further includes a plurality of detectors and a plurality of radio frequency antenna units. Each of the plurality of detectors corresponds to one wavelength selection unit, and is configured to: receive a third modulated optical signal from the corresponding wavelength selection unit, perform optical-to-electrical conversion on the received third modulated optical signal to obtain an electrical signal, and send the electrical signal through a radio frequency antenna unit corresponding to the first detector.

An example in which the beamforming apparatus includes M modulators, N wavelength selection units, and N*M phase shifters is used.

The first laser signal source is configured to transmit M laser signals, where wavelengths of the M laser signals are different. The M modulators are in a one-to-one correspondence with the M laser signals, and are respectively configured to modulate radio frequency signals on the corresponding laser signals to obtain M first modulated optical signals, where radio frequency signals modulated on any two of the M laser signals are the same or different. The first optical splitting device is coupled to the M modulators, and is configured to combine and distribute the M first modulated optical signals into N optical paths to obtain N second modulated optical signals corresponding to the N optical paths. The N wavelength selection units are coupled to the first optical splitting device. The N wavelength selection units are in a one-to-one correspondence with the N second modulated optical signals. A first wavelength selection unit is configured to: receive the second modulated optical signal sent by the first optical splitting device, and send signals with M wavelengths in the second modulated optical signal to M phase shifters in a one-to-one correspondence; and the first wavelength selection unit is any one of the N wavelength selection units. The M phase shifters are respectively configured to: adjust phases of the received optical signals, and send the phase-adjusted optical signals to the first wavelength selection unit. The N wavelength selection units are coupled to N detectors in a one-to-one correspondence. The first wavelength selection unit is further configured to: fuse the received optical signals from the corresponding M phase shifters to obtain a third modulated optical signal, and transmit the third modulated optical signal.

In some possible implementations, the beamforming apparatus further includes the N detectors and N radio frequency antenna units. The N detectors are coupled to the N wavelength selection units in a one-to-one correspondence, and the N detectors are coupled to the N radio frequency antenna units in a one-to-one correspondence. The N detectors are configured to: receive third modulated optical signals sent by the corresponding wavelength selection units, perform optical-to-electrical conversion on the received third modulated optical signals to obtain electrical signals, and send the electrical signals through the radio frequency antenna units corresponding to the first detectors.

In a possible design, the wavelength selection unit is a reconfigurable optical differential multiplexer ROADM.

In a possible design, the beamforming apparatus further includes: a control unit, configured to control phase shift spacings of the N*M phase shifters.

The control unit controls each phase shifter to adjust a phase shift variation amount of an optical signal with a corresponding wavelength, in other words, may change a transmit angle of the radio frequency signal with the wavelength at an antenna end after beamforming. In this embodiment of this application, a quantity M of radio frequency signals that can be simultaneously transmitted is not specifically limited. M radio frequency signals may be transmitted in a time division multiplexing manner, or may be all simultaneously transmitted, to implement full connection of the M radio frequency signals.

In a possible design, the first laser signal source includes M first laser devices, and the M first laser devices are coupled to the M modulators in a one-to-one correspondence. Wavelengths of the M first laser devices are different.

In a possible design, the first laser signal source includes an M-wavelength laser device and a wavelength division multiplexer, the M-wavelength laser device is coupled to the wavelength division multiplexer, and the wavelength division multiplexer is coupled to the M modulators.

In a possible design, the beamforming apparatus further includes a second laser signal source and a second optical splitting device.

The second laser signal source is configured to transmit M carrier optical signals that are in a one-to-one correspondence with the M laser signals.

The second optical splitting device is configured to couple and distribute the M carrier optical signals to the N detectors.

Each of the N detectors is specifically configured to: perform coherent detection on the received third modulated optical signal based on received carrier optical signals, and perform optical-to-electrical conversion on the coherently detected third modulated optical signal to obtain an electrical signal.

In the foregoing design, heterodyne coherent detection is implemented by adding the second laser signal source and the second optical splitting device, so that the design may be applied to an application scenario of heterodyne coherent detection. A radio frequency of each of M beams sent by radio frequency antenna ends is related to a frequency of a laser signal with each wavelength in the first laser signal source and a frequency of a laser signal with each wavelength in the second laser signal source. In some scenarios, a frequency of a laser signal with each wavelength in the first laser signal source or the second laser signal source may be further changed, to change a radio frequency of the laser signal, with the corresponding wavelength, sent by the radio frequency antenna end, to implement a frequency conversion operation.

In a possible design, the beamforming apparatus further includes a third optical splitting device.

One end of the third optical splitting device is coupled to the first laser signal source, the other end of the third optical splitting device is coupled to the N detectors, and the third optical splitting device is configured to couple and distribute the M laser signals to the N detectors.

A first detector in the N detectors is specifically configured to: perform coherent detection on the received third modulated optical signal based on received laser signals, and perform optical-to-electrical conversion on the coherently detected third modulated optical signal to obtain an electrical signal.

In the foregoing design, homodyne coherent detection may be implemented by adding the third optical splitting device, so that the design may be applied to an application scenario of heterodyne coherent detection. A radio frequency of each of M beams sent by radio frequency antenna ends is related to a frequency of a laser signal with each wavelength in the first laser signal source.

According to a second aspect, an embodiment of this application provides another beamforming apparatus. The apparatus includes a first laser signal source, M modulators, M first beam splitters, N first wavelength division multiplexers, and N*M phase shifters. The first laser signal source is configured to transmit M laser signals, where wavelengths of the M laser signals are different.

The M modulators are in a one-to-one correspondence with the M laser signals, and are respectively configured to modulate radio frequency signals on the corresponding laser signals to obtain M first modulated optical signals, where radio frequency signals modulated on any two of the M laser signals are the same or different.

The M first beam splitters are coupled to the M modulators in a one-to-one correspondence; and each of the M first beam splitters is coupled to input ends of N phase shifters, and is configured to: receive a first modulated optical signal sent by a corresponding modulator, distribute the received first modulated optical signal into N second modulated optical signals, and distribute the N second modulated optical signals to the N phase shifters in a one-to-one correspondence.

The N phase shifters are respectively configured to adjust phases of the received second modulated optical signals, to obtain third modulated optical signals.

An input end of each of the N first wavelength division multiplexers is coupled to output ends of M phase shifters, different first beam splitters are respectively coupled to input ends of M phase shifters coupled to a same first wavelength division multiplexer, and each first wavelength division multiplexer is configured to couple third modulated optical signals from the M phase shifters into a fourth modulated optical signal.

In a possible implementation, the beamforming apparatus further includes N detectors and N radio frequency antenna units. Second ends of the N first wavelength division multiplexers are coupled to input ends of the N detectors in a one-to-one correspondence, and output ends of the N detectors are coupled to the N radio frequency antenna units in a one-to-one correspondence. Each of the N detectors is configured to: receive a fourth modulated optical signal from a corresponding first wavelength division multiplexer, perform optical-to-electrical conversion on the fourth modulated optical signal to obtain an electrical signal, and send the electrical signal through a corresponding radio frequency antenna unit.

Compared with the beamforming apparatus provided in the first aspect, the beamforming apparatus provided in the second aspect does not require participation of a wavelength selection unit, and therefore costs and a size of the beamforming apparatus can be reduced.

In a possible design, the beamforming apparatus further includes: a control unit, configured to control phase shift spacings of the N*M phase shifters.

In a possible design, the first laser signal source includes M first laser devices, and the M first laser devices are coupled to the M modulators in a one-to-one correspondence. Wavelengths of the M first laser devices are different.

In a possible design, the first laser signal source includes a multi-wavelength laser device and a second wavelength division multiplexer, the M-wavelength laser device is coupled to the second wavelength division multiplexer, and the second wavelength division multiplexer is coupled to the M modulators.

In a possible design, the beamforming apparatus further includes a second laser signal source and a second optical splitting device. The second laser signal source is configured to transmit M carrier optical signals that are in a one-to-one correspondence with the M laser signals.

The second optical splitting device is configured to couple and distribute the M carrier optical signals to the N detectors.

Each of the N detectors is specifically configured to: perform coherent detection on the received fourth modulated optical signal based on received carrier optical signals, and perform optical-to-electrical conversion on the coherently detected fourth modulated optical signal to obtain an electrical signal.

In a possible design, the beamforming apparatus further includes a third optical splitting device.

One end of the third optical splitting device is coupled to the first laser signal source, the other end of the third optical splitting device is coupled to the N detectors, and the third optical splitting device is configured to couple and distribute the M laser signals to the N detectors.

A first detector in the N detectors is specifically configured to: perform coherent detection on the received third modulated optical signal based on received laser signals, and perform optical-to-electrical conversion on the coherently detected third modulated optical signal to obtain an electrical signal.

According to a third aspect, an embodiment of this application provides a beamforming method. The method includes: transmitting M laser signals with different wavelengths; respectively modulating radio frequency signals on the M laser signals to obtain M first modulated optical signals, where radio frequency signals modulated on any two of the M laser signals are the same or different; combining and distributing the M first modulated optical signals into N optical paths, to obtain N second modulated optical signals corresponding to the N optical paths; and on each optical path, performing phase adjustment on optical signals with M wavelengths included in the second modulated optical signal, coupling and performing optical-to-electrical conversion on the M phase-shifted optical signals to obtain an electrical signal, and transmitting the electrical signal through an antenna.

In a possible design, the method further includes: transmitting M carrier optical signals that are in a one-to-one correspondence with the M laser signals; and combining and splitting the M carrier optical signals into N paths of optical signals, where each of the N paths of optical signals includes M carrier optical signals. The coupling and performing optical-to-electrical conversion on the M phase-shifted optical signals on each path to obtain an electrical signal includes: on each optical path, respectively performing coherent detection on the M phase-shifted optical signals based on M received carrier optical signals, and performing optical-to-electrical conversion on the coherently detected optical signals to obtain the electrical signal.

In a possible design, the method further includes: coupling and splitting the M laser signals with the different wavelengths into N paths of optical signals, where each of the N paths of optical signals includes M laser signals with the different wavelengths. The coupling and performing optical-to-electrical conversion on the M phase-shifted optical signals to obtain an electrical signal includes: respectively performing coherent detection on the M phase-shifted optical signals based on M received laser signals, and performing optical-to-electrical conversion on the coherently detected optical signals to obtain the electrical signal.

According to a fourth aspect, an embodiment of this application provides a beamforming method. The method includes: transmitting M laser signals with different wavelengths; respectively modulating radio frequency signals on the M laser signals to obtain M first modulated optical signals, where radio frequency signals modulated on any two of the M laser signals are the same or different; splitting each of the M first modulated optical signals into N second modulated optical signals, to obtain N*M second modulated optical signals; respectively performing phase adjustment on each of the N*M second modulated optical signals to obtain a third modulated optical signal, to obtain N*M third modulated optical signals; coupling M third modulated optical signals included in each of N third modulated optical signal groups in the N*M third modulated optical signals into a fourth modulated optical signal, to obtain N fourth modulated optical signals, where wavelengths of the M third modulated optical signals included in each of the N third modulated optical signal groups are different; and performing optical-to-electrical conversion on each of the N fourth modulated optical signals to obtain an electrical signal, and transmit the electrical signal through a corresponding antenna.

In a possible design, the method further includes: transmitting M carrier optical signals that are in a one-to-one correspondence with the M laser signals; and combining and splitting the M carrier optical signals into N paths of optical signals, where each of the N paths of optical signals includes M carrier optical signals. The performing optical-to-electrical conversion on each of the N fourth modulated optical signals to obtain an electrical signal includes: performing coherent detection on the received fourth modulated optical signal based on M received carrier optical signals, and performing optical-to-electrical conversion on the coherently detected fourth modulated optical signal to obtain the electrical signal.

In a possible design, the method further includes: coupling and splitting the M laser signals with the different wavelengths into N paths of optical signals, where each of the N paths of optical signals includes M laser signals with the different wavelengths, and the N paths of optical signals are in a one-to-one correspondence with the N fourth modulated optical signals. The performing optical-to-electrical conversion on each of the N fourth modulated optical signals to obtain an electrical signal includes: performing, based on M laser signals in a first path of optical signals, coherent detection on a fourth modulated optical signal corresponding to the first path of optical signals, and performing optical-to-electrical conversion on the coherently detected optical signal to obtain an electrical signal.

### BRIEF DESCRIPTION OF DRAWINGS

FIG. 1 is a diagram of a structure of an integrated optical waveguide beamforming apparatus;
FIG. 2A is a diagram of a structure of a beamforming apparatus according to an embodiment of this application;
FIG. 2B is a diagram of a structure of another beamforming apparatus according to an embodiment of this application;
FIG. 3 is a schematic flowchart of beamforming based on a beamforming apparatus according to an embodiment of this application;
FIG. 4 is a diagram of a structure of another beamforming apparatus according to an embodiment of this application;
FIG. 5 is a diagram of a structure of still another beamforming apparatus according to an embodiment of this application;
FIG. 6 is a diagram of a structure of still another beamforming apparatus according to an embodiment of this application;
FIG. 7 is a diagram of a structure of still another beamforming apparatus according to an embodiment of this application;
FIG. 8 is a diagram of a structure of still another beamforming apparatus according to an embodiment of this application;
FIG. 9 is a diagram of a structure of a beamforming apparatus in a heterodyne coherent detection scenario according to an embodiment of this application;
FIG. 10A is a diagram of a structure of another beamforming apparatus in a heterodyne coherent detection scenario according to an embodiment of this application;
FIG. 10B is a diagram of a structure of still another beamforming apparatus in a heterodyne coherent detection scenario according to an embodiment of this application;
FIG. 11 is a diagram of a structure of still another beamforming apparatus in a heterodyne coherent detection scenario according to an embodiment of this application;
FIG. 12 is a diagram of a structure of a beamforming apparatus in a homodyne coherent detection scenario according to an embodiment of this application;
FIG. 13 is a diagram of a structure of still another beamforming apparatus according to an embodiment of this application;
FIG. 14 is a diagram of a structure of still another beamforming apparatus according to an embodiment of this application;
FIG. 15 is a diagram of a structure of still another beamforming apparatus according to an embodiment of this application;
FIG. 16 is a diagram of a structure of still another beamforming apparatus according to an embodiment of this application;
FIG. 17 is a diagram of a structure of still another beamforming apparatus according to an embodiment of this application;
FIG. 18 is a diagram of a structure of still another beamforming apparatus according to an embodiment of this application;
FIG. 19 is a diagram of a structure of still another beamforming apparatus according to an embodiment of this application;
FIG. 20 is a schematic flowchart of a beamforming method according to an embodiment of this application; and
FIG. 21 is a schematic flowchart of another beamforming method according to an embodiment of this application.

### DESCRIPTION OF EMBODIMENTS

To make objectives, technical solutions, and advantages of embodiments of this application clearer, the following clearly and completely describes the technical solutions in embodiments of this application with reference to the accompanying drawings in embodiments of this application. Clearly, the described embodiments are merely a part rather than all of embodiments of this application. All other embodiments obtained by persons of ordinary skill in the art based on embodiments of this application without creative efforts shall fall within the protection scope of this application.

The term "at least one" in this application means one or more, that is, includes one, two, three, or more; and the term "a plurality of" means two or more, that is, includes two, three, or more. In addition, it should be understood that in descriptions of this application, the terms such as "first" and "second" are merely used for distinguishing and description, but should not be understood as indicating or implying relative importance, or should not be understood as indicating or implying a sequence. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

Beamforming (Beamforming) is also referred to as beam shaping and spatial filtering, is a signal processing technology for array-based directional signal sending and receiving, and can be used at both a signal transmitting end and a signal receiving end. In the beamforming technology, a phase or delay of each transmitted signal in an array antenna is controlled, so that beams are interfered with and combined in a specific wavefront direction, and therefore a direction pointing angle of a signal beam is changed.

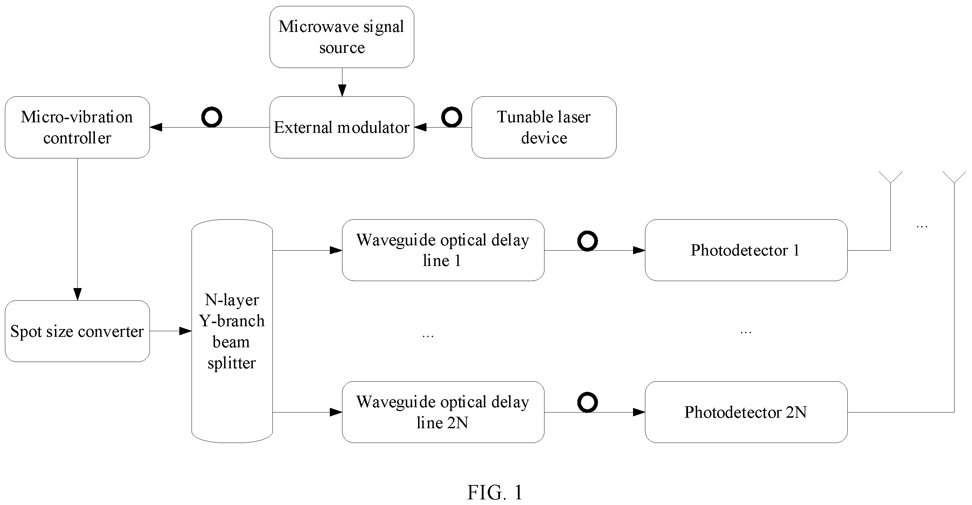

A current mainstream technical solution of beamforming is to use an electrical device to perform phase control, to implement a beamforming function. The beamforming solution using the electrical device cannot meet a requirement of increased antenna data caused by expansion of signal capacity. Therefore, currently, it is provided to expand a traffic channel by using characteristics of polarization and mode multiplexing of light. In a possible beamforming solution for light, a tunable laser device is used as a light source, a plurality of Bragg gratings with different center wavelengths are written onto a waveguide optical delay line, and Bragg gratings with a same center wavelength are enabled to locate at different locations in adjacent waveguide optical delay lines, to control a transmission delay of an optical signal by selecting an output wavelength of the laser device. In this way, a beamforming effect is achieved for a microwave signal, as shown in FIG. 1.

Embodiments of this application provide a beamforming apparatus and method, to implement a fully connected beamforming solution by using a wavelength division multiplexing technology. The method and the apparatus are based on a same inventive concept. Because the method and the apparatus have a similar problem-resolving principle, for implementations of the apparatus and the method, refer to each other, and no repeated description is provided.

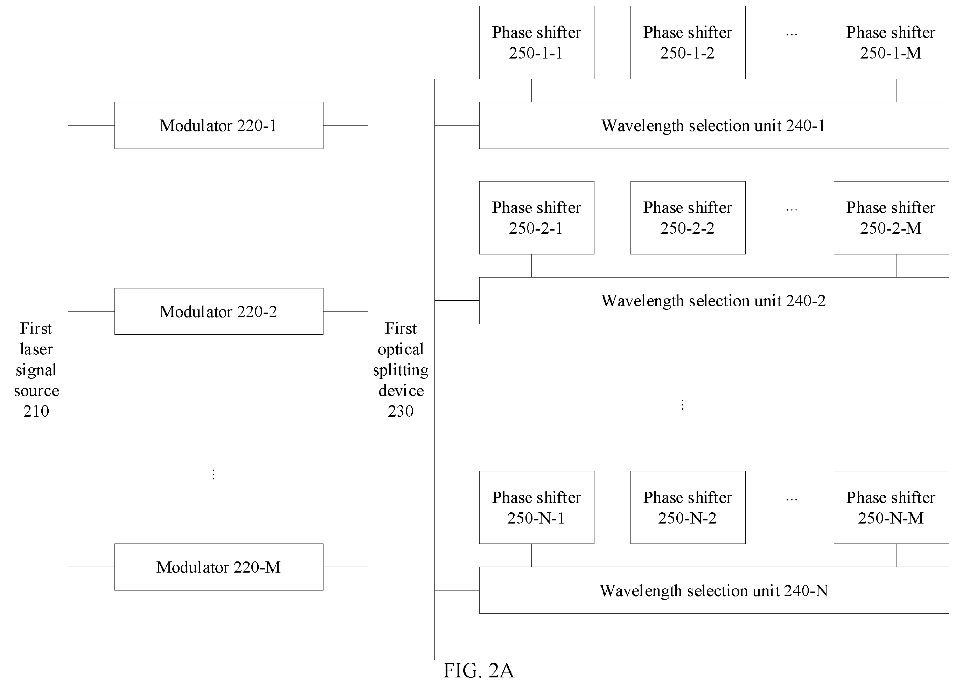

FIG. 2A shows a beamforming apparatus according to an embodiment of this application. An example in which M radio frequency signals are transmitted through N antenna ends is used.

With reference to FIG. 2A, the beamforming apparatus includes a first laser signal source 210, M modulators 220, a first optical splitting device 230, N wavelength selection units 240, and N*M phase shifters 250. For ease of distinguishing between the N wavelength selection units 240, in FIG. 2A, the N wavelength selection units 240 are referred to as a wavelength selection unit 240-1 to a wavelength selection unit 240-N. The first laser signal source 210 is separately coupled to the M modulators 220. Coupling refers to optical connection between inputs and outputs of two or more optical devices, where light energy is transmitted from one side to another side through interaction. For example, two optical devices may be connected through an optical fiber. The M modulators 220 are separately coupled to the first optical splitting device 230. It may be understood that one end of each of the M modulators 220 is coupled to the first laser signal source 210, and the other end of each modulator is coupled to the first optical splitting device 230. The first optical splitting device 230 is separately coupled to the N wavelength selection units 240. Every M phase shifters 250 in the N*M phase shifters 250 are coupled to one wavelength selection unit 240. It may be understood that the N*M phase shifters 250 are divided into N phase shifter groups. In an example, in FIG. 2A, the N phase shifter groups are referred to as a phase shifter group 1 to a phase shifter group N. Each group includes M phase shifters 250. For ease of distinguishing, M phase shifters 250 included in the phase shifter group 1 are referred to as a phase shifter 250-1-1 to a phase shifter 250-1-M; M phase shifters 250 included in a phase shifter group 2 are referred to as a phase shifter 250-2-1 to a phase shifter 250-2-M; and by analogy, M phase shifters 250 included in the phase shifter group N are referred to as a phase shifter 250-N-1 to a phase shifter 250-N-M. The N phase shifter groups are in a one-to-one correspondence with the N wavelength selection units 240, and M phase shifters included in one phase shifter group are connected to a corresponding wavelength selection unit 240. The phase shifter group 1 is used as an example. The phase shifter 250-1-1 to the phase shifter 250-1-M in the phase shifter group 1 are coupled to the wavelength selection unit 240-1.

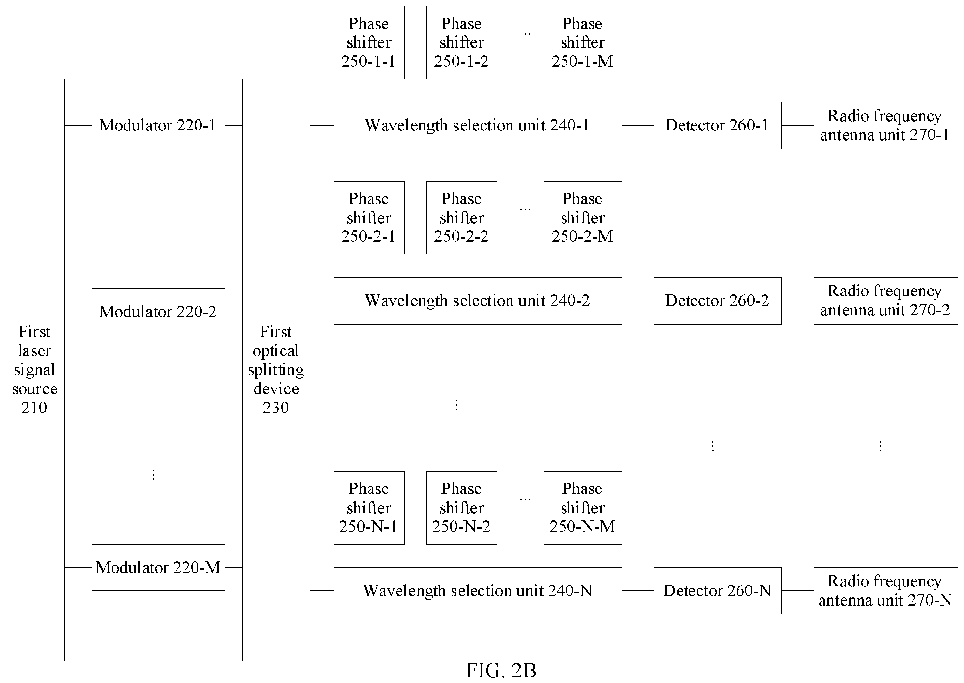

In a possible implementation, the beamforming apparatus further includes a detector array and a radio frequency antenna array, as shown in FIG. 2B. For example, the detector array includes N detectors. For example, the radio frequency antenna array includes N radio frequency antenna units 270. For ease of distinguishing between the M modulators 220, in FIG. 2B, the M modulators 220 are referred to as a modulator 220-1 to a modulator 220-M. For ease of distinguishing, in FIG. 2B, the N detectors 260 are referred to as a detector 260-1 to a detector 260-N. For ease of distinguishing, in FIG. 2B, the N radio frequency antenna units 270 are referred to as a radio frequency antenna unit 270-1 to a radio frequency antenna unit 270-N. Ends of the N detectors 260 are coupled to the N wavelength selection units 240 in a one-to-one correspondence, and the other ends of the N detectors 260 are coupled to the N radio frequency antenna units 270 in a one-to-one correspondence.

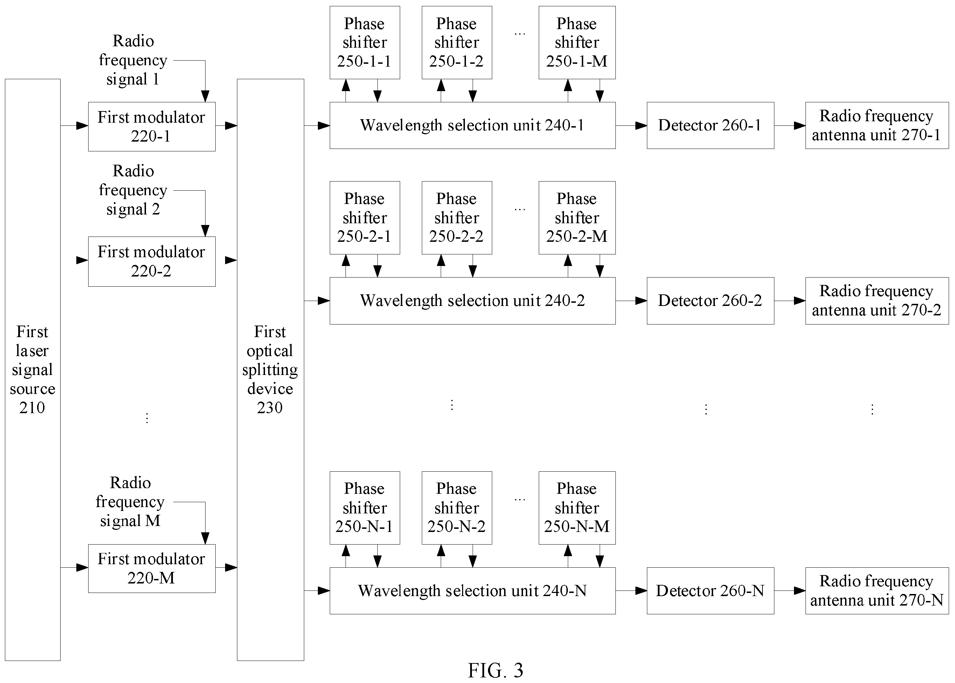

The following describes a signal flow direction of the beamforming apparatus. FIG. 3 is a diagram of a signal flow of the beamforming apparatus.

The first laser signal source 210 transmits M laser signals with different wavelengths. The M laser signals with the different wavelengths respectively correspond to wavelengths λ₁ to λ*_{M}*. The M laser signals with the different wavelengths respectively enter different modulators 220. For example, the M different laser signals are a laser signal 1 to a laser signal M. The laser signal 1 enters the modulator 220-1; a laser signal 2 enters a modulator 220-2; and by analogy, the laser signal M enters the modulator 220-M.

The M modulators 220-1 to 220-M are in a one-to-one correspondence with the laser signal 1 to the laser signal M, and respectively receive the laser signals of the corresponding wavelengths. Each modulator 220 modulates a radio frequency signal on a corresponding received laser signal, to obtain M first modulated optical signals. Radio frequency signals modulated on any two of the M laser signals may be the same or different. A specific radio frequency signal that is modulated may be determined based on a user requirement. The first modulated optical signals that are respectively obtained through modulation by the M modulators 220-1 to 220-M enter the first optical splitting device 230.

After receiving the M first modulated optical signals, the first optical splitting device 230 couples the M first modulated optical signals, divides one path of coupled optical signals into N paths of optical signals, and distributes the N paths of optical signals to N optical paths, to obtain N second modulated optical signals corresponding to the N optical paths. The first optical splitting device 230 sends the N second modulated optical signals to the N wavelength selection units 240 in a one-to-one correspondence. After receiving the second modulated optical signal, each wavelength selection unit 240 sends, in a one-to-one correspondence, optical signals with M wavelengths included in the second modulated optical signal to M phase shifters coupled to the wavelength selection unit 240.

With reference to FIG. 3, the wavelength selection unit 240-1 is used as an example. After receiving the second modulated optical signal, the wavelength selection unit 240-1 sends, in a one-to-one correspondence, optical signals with the M wavelengths in the second modulated optical signal to the phase shifter 250-1-1 to the phase shifter 250-1-M. For example, the phase shifter 250-1-1 corresponds to an optical signal whose wavelength is λ₁; a phase shifter 250-1-2 corresponds to an optical signal whose wavelength is λ₂; and by analogy, the phase shifter 250-1-M corresponds to an optical signal whose wavelength is λ*_{M}*. Each phase shifter is configured to: adjust a phase of a received optical signal with a corresponding wavelength, and return the phase-adjusted optical signal to the wavelength selection unit. For example, the wavelength selection unit 240-1 extracts the optical signal whose wavelength is λ₁ from the second modulated optical signal, and sends the optical signal to the phase shifter 250-1-1. The phase shifter 250-1-1 adjusts a phase of the optical signal whose wavelength is λ₁, and then sends the adjusted optical signal whose wavelength is λ₁ to the wavelength selection unit 240-1. The wavelength selection unit 240-1 extracts the optical signal whose wavelength is λ₂ from the second modulated optical signal, and sends the optical signal to the phase shifter 250-1-2. The phase shifter 250-1-2 adjusts a phase of the optical signal whose wavelength is λ₂, and then sends the adjusted optical signal whose wavelength is λ₂ to the wavelength selection unit 240-1. By analogy, the wavelength selection unit 240-1 extracts the optical signal whose wavelength is λ*_{M}* from the second modulated optical signal, and sends the optical signal to the phase shifter 250-1-M. The phase shifter 250-1-M adjusts a phase of the optical signal whose wavelength is λ*_{M}*, and then sends the adjusted optical signal whose wavelength is λ*_{M}* to the wavelength selection unit 240-1. The N wavelength selection units 240 have a same function, and a manner of processing second modulated optical signals by other wavelength selection units 240-2 to 240-N is similar to the manner of processing the second modulated optical signal by the wavelength selection unit 240-1. Details are not described herein again.

In this embodiment of this application, phase shifters corresponding to a same wavelength (for example, λ₁) in the N paths only adjust phases of optical signals whose wavelengths are λ₁ and that are obtained after the N first modulated optical signals are split, and it does not indicate that the phase shifters corresponding to the wavelength λ₁ in the N paths have a same phase variation amount. Phase shift variation amounts of N phase shifters with a same wavelength in the N paths may be the same or may be different. This is not specifically limited in this embodiment of this application. For example, the phase shifter 250-1-1, the phase shifter 250-2-1, ..., and the phase shifter 250-N-1 are all configured to perform phase shifting on optical signals whose wavelengths are λ₁, and phase shift variation amounts caused by the phase shifter 250-1-1, the phase shifter 250-2-1, ..., and the phase shifter 250-N-1 to the optical signals whose wavelengths are λ₁ may be the same or different. Similarly, the phase shifter 250-1-2, a phase shifter 250-2-2, ..., and a phase shifter 250-N-2 are all configured to perform phase shifting on optical signals whose wavelengths are λ₂, and phase shift variation amounts caused by the phase shifter 250-1-2, the phase shifter 250-2-2, ..., and the phase shifter 250-N-2 to the optical signals whose wavelengths are λ₂ may be the same or different. The rest may be deduced by analogy.

Each wavelength selection unit 240 sends, to a corresponding first detector 260, a phase-shifted optical signal received from each phase shifter 250. In some embodiments, each wavelength selection unit 240 fuses phase-shifted optical signals received from the M phase shifters 250, to obtain a third modulated optical signal, and sends the third modulated optical signal to the corresponding first detector 260. For example, as shown in FIG. 3, after receiving phase-shifted optical signals sent by the phase shifter 250-1-1 to the phase shifter 250-1-M, the wavelength selection unit 240-1 fuses the M phase-shifted optical signals, and sends a fused optical signal to the detector 260-1. Further, the detector 260-1 is configured to perform optical-to-electrical conversion on the received third modulated optical signal to obtain an electrical signal. Then, the radio frequency antenna unit 270-1 coupled to the detector 260-1 sends the electrical signal. Similarly, after receiving phase-shifted optical signals sent by the phase shifter 250-2-1 to the phase shifter 250-2-M, the wavelength selection unit 240-2 fuses the M phase-shifted optical signals, and sends a fused optical signal to a detector 260-2. Further, the detector 260-2 is configured to perform optical-to-electrical conversion on the received third modulated optical signal to obtain an electrical signal. Then, a radio frequency antenna unit 270-2 coupled to the detector 260-2 sends the electrical signal. The rest may be deduced by analogy.

The following describes the devices mentioned above. For ease of description subsequently, illustrations of the devices are not provided again.

### (1) First laser signal source 210:

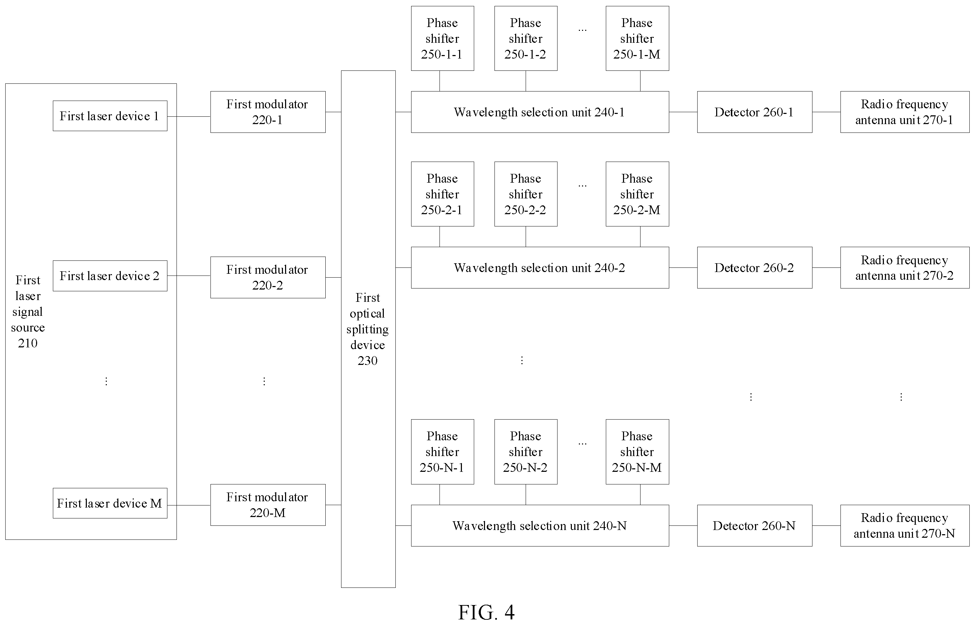

In a possible example, the first laser signal source 210 may include M laser devices, as shown in FIG. 4. In FIG. 4, the laser device included in the first laser signal source is referred to as a first laser device. The M laser devices are a first laser device 1 to a first laser device M. Wavelengths of laser signals sent by the first laser device 1 to the first laser device M are different. The wavelengths of the laser signals respectively transmitted by the first laser device 1 to the first laser device M are λ₁ to λ*_{M}*.

Powers of the laser signals generated by the M first laser devices may be the same or may be different. A wavelength spacing between laser signals transmitted by any two first laser devices in the first laser device 1 to the first laser device M may be determined based on an actual requirement. For example, the wavelength spacing between the laser signals transmitted by the any two first laser devices is greater than a specified threshold.

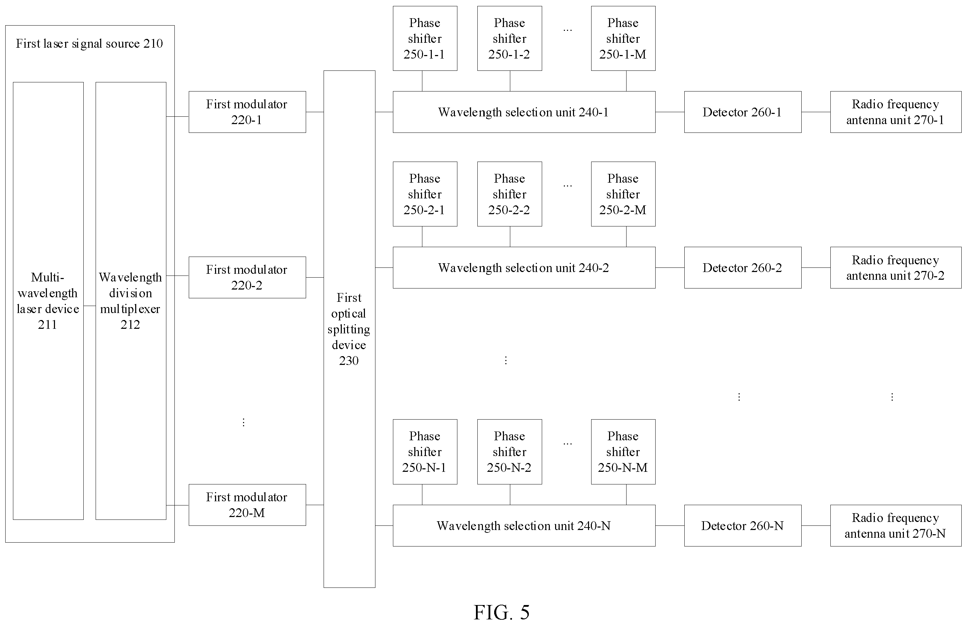

In another possible example, the first laser signal source 210 uses a multi-wavelength laser device. With reference to FIG. 5, the first laser signal source 210 includes a multi-wavelength laser device 211 and a wavelength division multiplexer 212. The multi-wavelength laser device 211 may transmit one path of optical signals with the M wavelengths. The wavelength division multiplexer 212 distributes the path of optical signals with the M wavelengths into M paths of optical signals. Wavelengths of the M paths of optical signals are different.

(2) Modulator 220: In this embodiment of this application, there is no specific limitation on a modulation format of the modulator 220. For example, a coherent modulation scheme or an intensity modulation scheme may be used.

### (3) First optical splitting device 230:

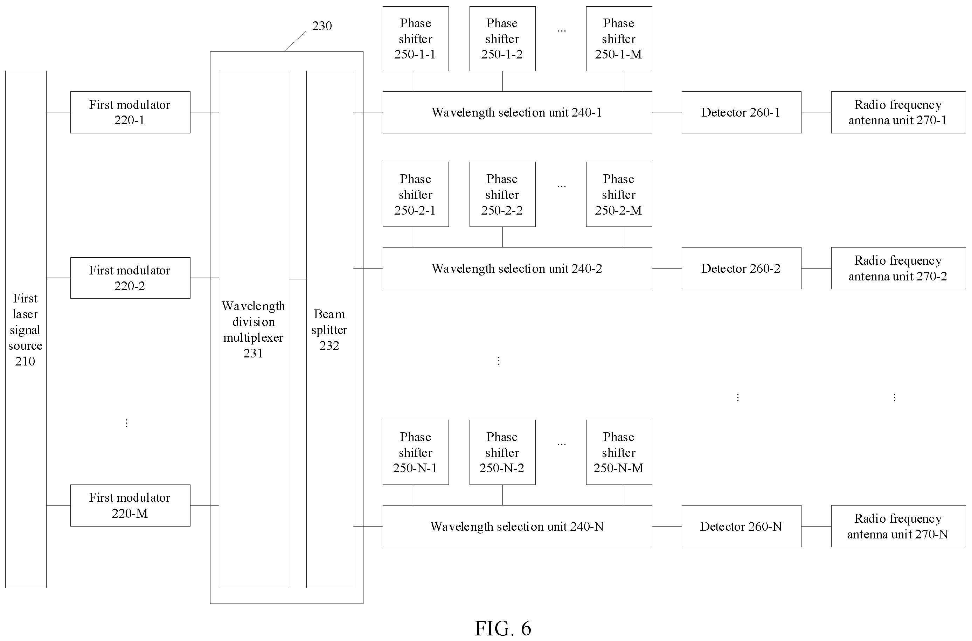

In a possible example, with reference to FIG. 6, the first optical splitting device 230 may include a wavelength division multiplexer 231 and a beam splitter 232. A function of the wavelength division multiplexer 231 is to couple, into one path of signal, M optical signals that are with different wavelengths, that are obtained by modulating radio frequency signals, and that are sent by the M modulators 220. For example, the wavelength division multiplexer 231 is connected to the beam splitter 232 through a waveguide. The wavelength division multiplexer 231 couples, into a same waveguide, the M optical signals that are with the different wavelengths, that are obtained by modulating the radio frequency signals, and that are sent by the M modulators 220. A function of the beam splitter 232 is to split one path of input light transmitted by the wavelength division multiplexer 231 into N paths of optical signals (wavelengths are not distinguished) with a same power, where each light includes a plurality of optical signals with different wavelengths; and separately transmit the obtained N paths of optical signals to the N wavelength selection units 240 through waveguides. For example, each path of light may include optical signals whose wavelengths are λ₁, λ₂, ..., and λ*_{M}*. A value of N may be determined based on a quantity of wavelength selection units 240, and N is an integer greater than or equal to 2. Because the M optical signals that are with the different wavelengths, that are obtained by modulating the radio frequency signals, and that are sent by the M modulators 220 respectively carry the radio frequency signals, in this manner, the N paths of optical signals obtained through the wavelength division multiplexer 231 and the beam splitter 232 each include radio frequency signals carried by a plurality of optical signals whose wavelengths are λ₁, λ₂, ..., and λ*_{M}*. For example, when the M wavelength selection units 240 are connected to in the wavelength division multiplexing manner shown in FIG. 6, devices in the entire beamforming apparatus may be connected through waveguides.

The first optical splitting device 230 may be a planar waveguide. In this case, the M optical signals that are with the different wavelengths, that are obtained by modulating the radio frequency signals, and that are sent by the M modulators 220 are transmitted to the M wavelength selection units 240 through planar waveguide space.

### (4) Wavelength selection unit 240:

In some embodiments, the wavelength selection unit may be a reconfigurable optical add-drop multiplexer (reconfigurable optical add-drop multiplexer, ROADM), or another reconfigurable optical device that can be used for wavelength selection.

(5) Phase shifter 250: In this embodiment of this application, no specific limitation is imposed on the phase shifter, and all optical devices with a phase shifting function of adjusting a phase of an optical signal are applicable to this application.

### (6) Radio frequency antenna array:

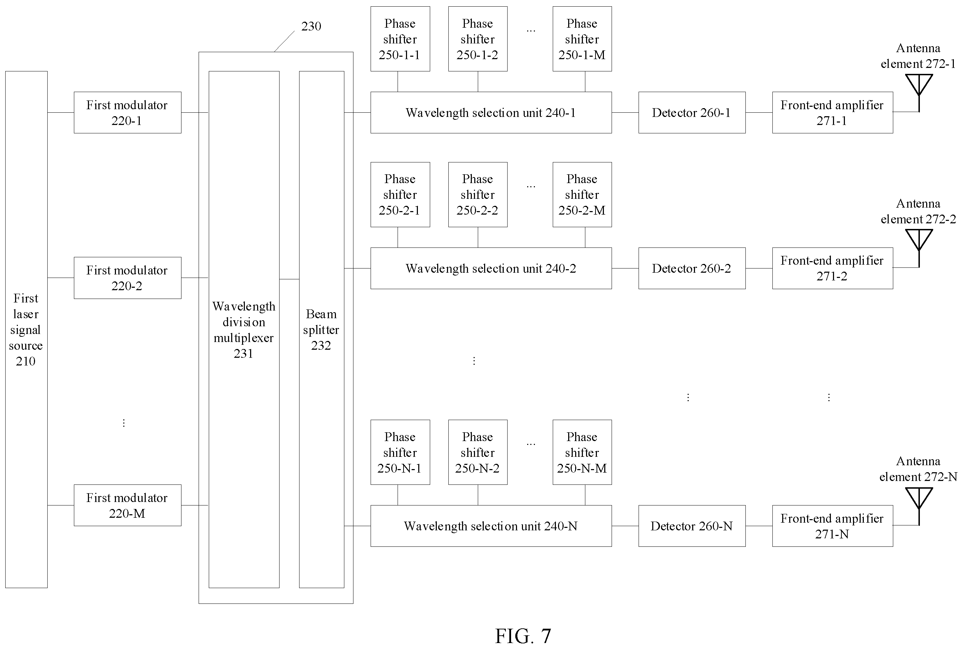

The radio frequency antenna array may include the N radio frequency antenna units 270. In some possible examples, with reference to FIG. 7, the radio frequency antenna unit 270 may include a front-end amplifier 271 and an antenna element 272. In another possible example, the radio frequency antenna unit 270 may include an antenna element. The front-end amplifier 271 is configured to: perform front-end amplification on an electrical signal from the detector 260, and send the electrical signal to the antenna element 272. The antenna element 272 transmits the received electrical signal from the front-end amplifier 271.

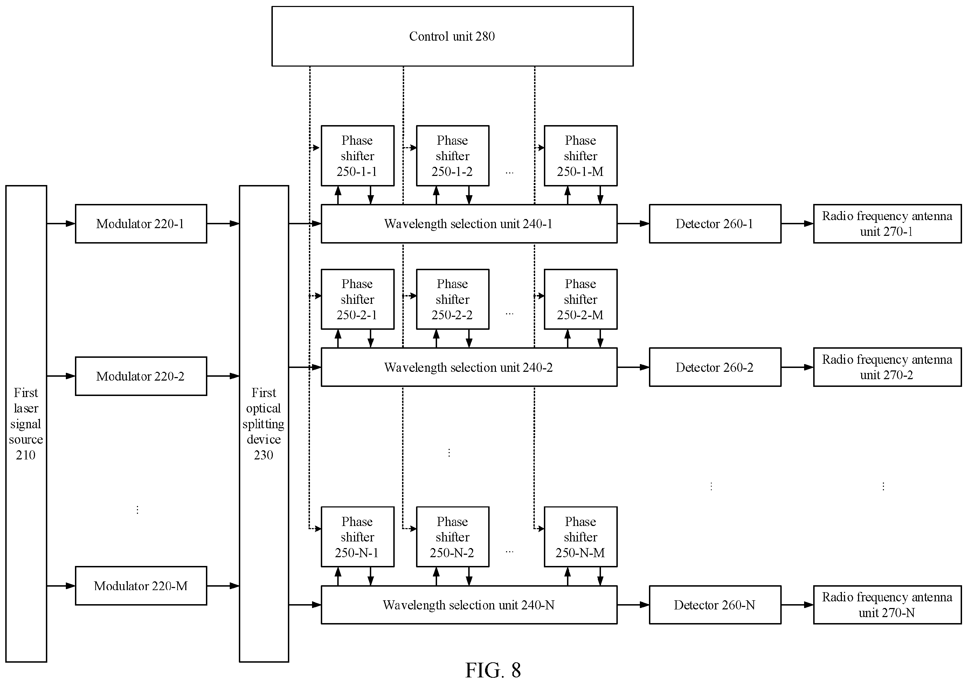

In a possible implementation, the beamforming apparatus may further include a control unit 280. With reference to FIG. 8, the control unit 280 may be configured to control phase shift spacings of the N*M phase shifters. For example, the control unit 280 may control phase shift variation amounts of N phase shifters of a same wavelength in the N paths to be the same or different. For example, the control unit 280 controls the phase shift variation amounts caused by the phase shifter 250-1-1, the phase shifter 250-2-1, ..., and the phase shifter 250-N-1 to the optical signals whose wavelengths are λ₁ to be the same or different. The control unit 280 controls the phase shift variation amounts caused by the phase shifter 250-1-2, the phase shifter 250-2-2, ..., and the phase shifter 250-N-2 to the optical signals whose wavelengths are λ₂ to be the same or different. The rest may be deduced by analogy.

The control unit 280 provided in the foregoing embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like. It should be understood that the control unit 280 in the foregoing embodiment of this application may be implemented by one or more processors. A quantity of processors may be adjusted based on an actual application scenario. This is merely an example for description herein, and is not limited.

In this embodiment of this application, the control unit 280 controls the phase shift variation amounts caused by the phase shifter 250-1-1, the phase shifter 250-2-1, ..., and the phase shifter 250-N-1 to the optical signals whose wavelengths are λ₁, that is, may change a transmit angle of a radio frequency signal 1 at the antenna end after beamforming. The control unit 280 controls the phase shift variation amounts caused by the phase shifter 250-1-2, the phase shifter 250-2-2, ..., and the phase shifter 250-N-2 to the optical signals whose wavelengths are λ₂, that is, may change a transmit angle of a radio frequency signal 2 at the antenna end after beamforming. By analogy, the control unit 280 may change transmit angles of radio frequency signals 1 to M at the antenna ends after beamforming, to complete beamforming. In this embodiment of this application, a quantity M of radio frequency signals that can be simultaneously transmitted is not specifically limited. The M radio frequency signals may be transmitted in a time division multiplexing manner, or may be all simultaneously transmitted, to implement full connection of the M radio frequency signals.

In a possible implementation, the beamforming apparatus may further include a memory, which is not is shown in the figure. The memory may be configured to store program instructions. The control unit 280 may be configured to read a program instruction from the memory to control the phase shifter. In some scenarios, the memory may alternatively be deployed inside the control unit 280. For example, the control unit 280 includes a processor and the memory. In other words, the processor and the memory may be integrated together, or the memory and the processor may be connected through an interface, which may be adjusted based on the actual application scenario. This is not specifically limited in this embodiment of this application.

There may be one or more memories in this embodiment of this application. A quantity of memories may be adjusted based on the actual application scenario. This is merely an example for description herein, and is not limited.

It should be further understood that, in this embodiment of this application, the memory, the readable storage medium, or the like described in the foregoing embodiment may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

This embodiment of this application may be applied to an application scenario of direct modulation and direct detection, or may be applied to an application scenario of heterodyne or homodyne detection. For example, the beamforming apparatus described in the embodiment corresponding to FIG. 2A to FIG. 7 may be applied to the application scenario of direct modulation and direct detection.

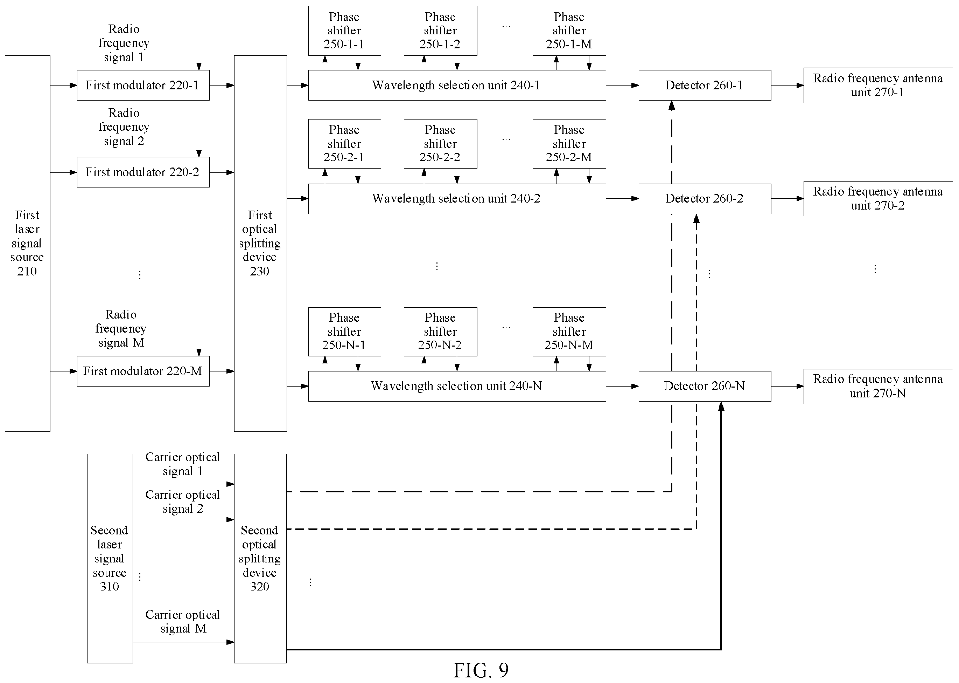

In a possible implementation, when the beamforming apparatus is applied to an application scenario of heterodyne coherent detection, the beamforming apparatus may further include a second laser signal source 310 and a second optical splitting device 320, as shown in FIG. 9. The second laser signal source 310 is configured to transmit M carrier optical signals that are in a one-to-one correspondence with the M laser signals. Wavelengths of the M carrier optical signals are the same as the wavelengths of the corresponding laser signals. The second optical splitting device 320 is configured to couple and distribute the M carrier optical signals to the N detectors 260. Then, each of the N detectors 260 performs coherent detection on a received third modulated optical signal based on received carrier optical signals, and performs optical-to-electrical conversion on the coherently detected third modulated optical signal to obtain an electrical signal.

Carrier optical signals 1 to M are coupled into one path of optical signals through the second optical splitting device 320, and then are split into N paths of optical signals. Each of the N paths of optical signals may include optical signals with the M wavelengths. In the detector 260, optical signals that have a same wavelength and that are separately in the received third modulated optical signal and the optical signals with the M wavelengths exhibit a beat frequency. Coherent detection and optical-to-electrical conversion are performed to obtain an electrical signal, and then the electrical signal is transmitted through the radio frequency antenna unit 270.

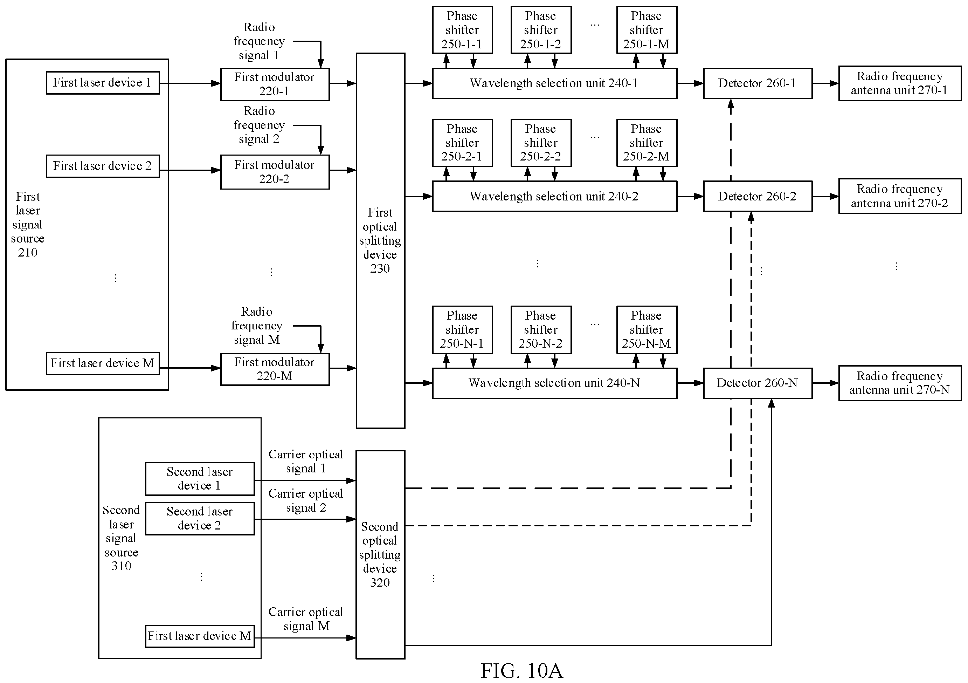

A structure of the second laser signal source 310 is similar to that of the first laser signal source 210. In a possible example, the second laser signal source 310 includes M laser devices, as shown in FIG. 10A. In FIG. 10A, the laser device included in the second laser signal source is referred to as a second laser device. The M laser devices are a second laser device 1 to a second laser device M. Wavelengths of carrier optical signals sent by the second laser device 1 to the first laser device M are different. The wavelengths of the carrier optical signals respectively transmitted by the second laser device 1 to the second laser device M are λ₁ to λ*_{M}*. Powers of the carrier optical signals generated by the M second laser devices may be the same or may be different. A wavelength spacing between laser signals transmitted by any two second laser devices in the second laser device 1 to the second laser device M may be determined based on the actual requirement. For example, the wavelength spacing between the laser signals transmitted by the any two second laser devices is greater than a specified threshold.

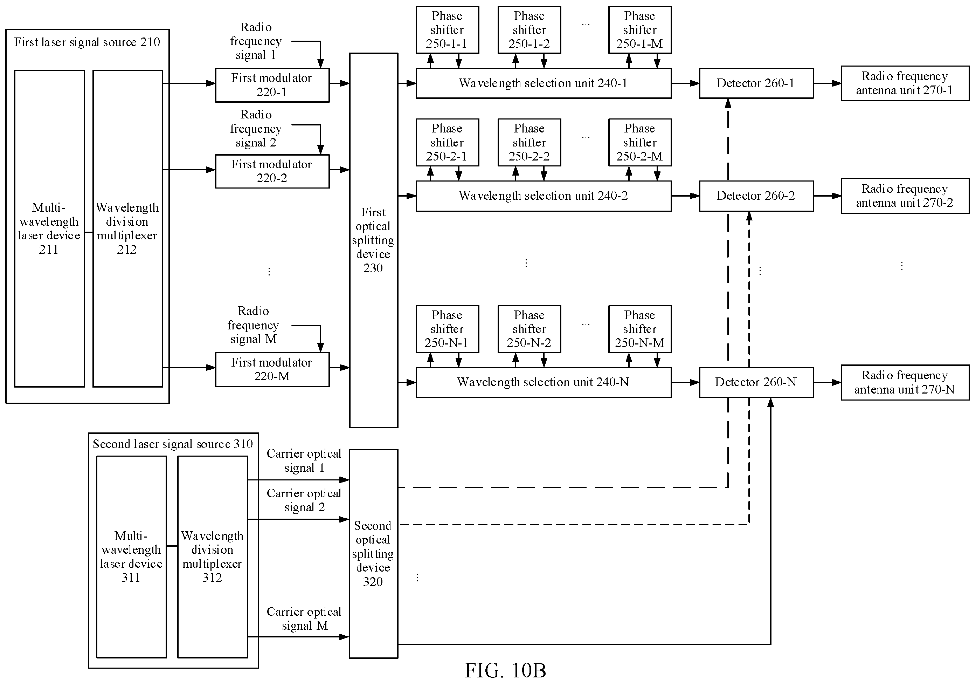

In another possible example, the second laser signal source 310 uses a multi-wavelength laser device. With reference to FIG. 10B, the second laser signal source 310 includes a multi-wavelength laser device 311 and a wavelength division multiplexer 312. The multi-wavelength laser device 311 may transmit one path of optical signals with the M wavelengths. The wavelength division multiplexer 312 distributes the path of optical signals with the M wavelengths into M paths of optical signals. Wavelengths of the M paths of optical signals are different, and are λ₁ to λ*_{M}*.

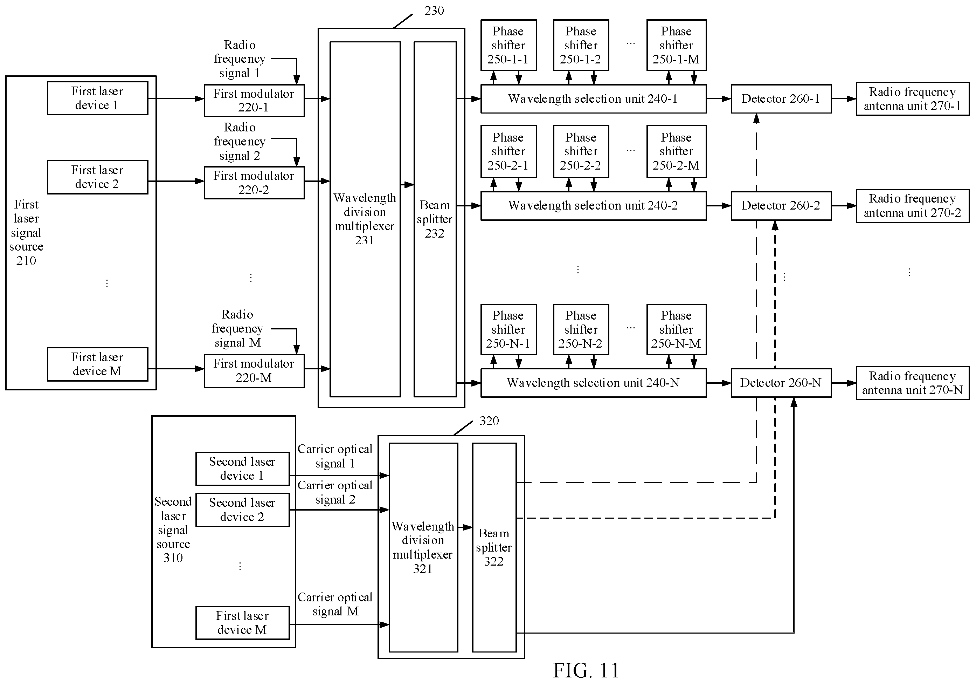

A structure of the second optical splitting device 320 is similar to that of the first optical splitting device 310. In an example, with reference to FIG. 11, the second optical splitting device 320 includes a wavelength division multiplexer 321 and a beam splitter 322. A function of the wavelength division multiplexer 321 is to couple, into one path of signal, the M carrier optical signals that are with different wavelengths and that are sent by the second laser signal source 310. For example, the wavelength division multiplexer 321 is connected to the beam splitter 322 through a waveguide. The wavelength division multiplexer 321 couples, into a same waveguide, the M carrier optical signals that are with the different wavelengths and that are sent by the second laser signal source 310. A function of the beam splitter 322 is to split one path of input light transmitted by the wavelength division multiplexer 321 into N paths of optical signals (wavelengths are not distinguished) with a same power, where each light includes a plurality of optical signals with different wavelengths; and separately transmit the obtained N paths of optical signals to the N detectors 260 through waveguides.

In some embodiments, the second laser signal source 310 and the second optical splitting device 320 may also be deployed outside the beamforming apparatus as an independent device. When the independent device is connected to the beamforming apparatus, heterodyne coherent detection may be implemented. When the independent device is not connected to the beamforming apparatus, direct modulation and direct detection may be implemented.

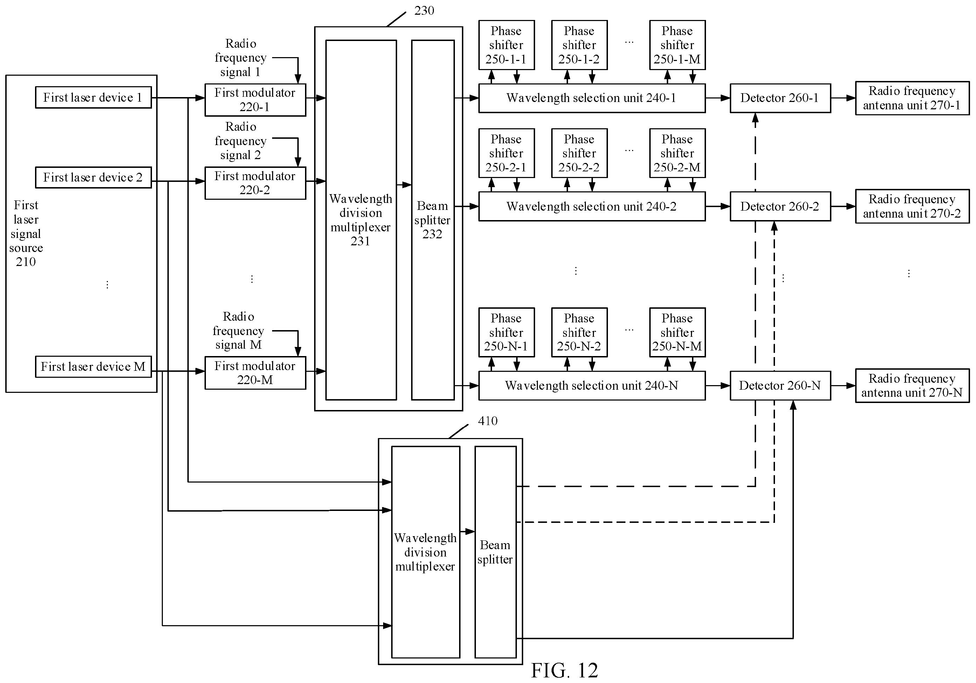

In a possible implementation, when the beamforming apparatus is applied to an application scenario of homodyne coherent detection, the beamforming apparatus may further include a third optical splitting device 410, as shown in FIG. 12. One end of the third optical splitting device 410 is coupled to the first laser signal source, the other end of the third optical splitting device 410 is coupled to the N detectors, and the third optical splitting device 410 is configured to couple and distribute the M laser signals to the N detectors 260. Then, each of the N detectors 260 performs coherent detection on a received third modulated optical signal based on received laser signals, performs optical-to-electrical conversion on the coherently detected third modulated optical signal to obtain an electrical signal, and transmits the electrical signal through the radio frequency antenna unit 270.

A structure of the third optical splitting device 410 is similar to those of the second optical splitting device 320 and the first optical splitting device 310. For example, the third optical splitting device 410 also includes a wavelength division multiplexer and a beam splitter.

In some embodiments, the third optical splitting device 410 may also be deployed outside the beamforming apparatus as an independent device. When the independent device is connected to the beamforming apparatus, homodyne coherent detection may be implemented. When the independent device is not connected to the beamforming apparatus, direct modulation and direct detection may be implemented.

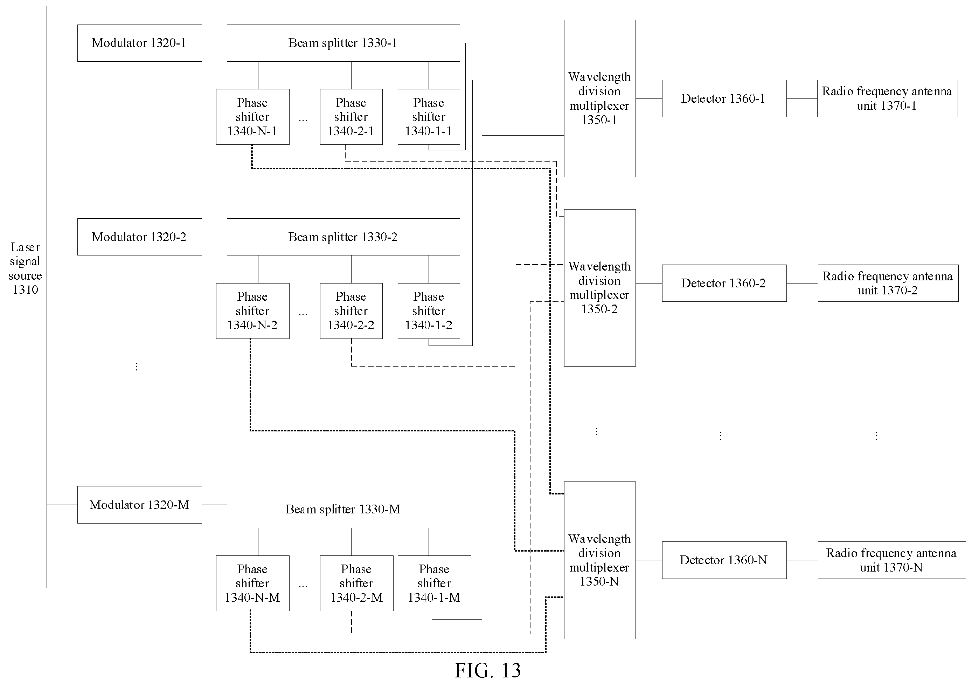

FIG. 13 shows another beamforming apparatus according to an embodiment of this application. An example in which M radio frequency signals are transmitted through N antenna ends is used. Different from the beamforming apparatus shown in FIG. 2A to FIG. 12, the beamforming apparatus does not need a wavelength selection unit. In this way, a quantity of devices of the beamforming apparatus can be reduced, costs can be reduced, and space utilization can be improved.

With reference to FIG. 13, the beamforming apparatus includes a laser signal source 1310, M modulators 1320, M beam splitters 1330, N wavelength division multiplexers 1350, N*M phase shifters 1340, N detectors 1360, and N radio frequency antenna units 1370. The N detectors 1320 may be arranged in an array manner. The N radio frequency antenna units may be arranged in an array manner.

The laser signal source 1310 is coupled to the M modulators 1320. The M modulators 1320 are coupled to the M beam splitters 1330 in a one-to-one correspondence. Each beam splitter 1330 is coupled to N phase shifters 1340. Groups of N phase shifters 1340 coupled to different beam splitters 1330 are different. For ease of distinguishing, in FIG. 13, the M modulators 1320 are referred to as a modulator 1320-1 to a modulator 1320-M. The M beam splitters 1330 are referred to as a beam splitter 1330-1 to a beam splitter 1330-M.

Every M phase shifters 1340 in the N*M phase shifters 1340 may be considered as a phase shifter group. M phase shifters 1340 included in one phase shifter group are all connected to a same wavelength division multiplexer 1350. For example, an input end of a wavelength division multiplexer 1350 includes M ports, and the M ports of the input end of the wavelength division multiplexer 1350 are connected to output ends of M phase shifters 1340 included in a phase shifter group. Input ends of M phase shifters 1340 included in a phase shifter group are respectively connected to different beam splitters 1330. In other words, an input end of each of the N wavelength division multiplexers 1350 is coupled to output ends of M phase shifters 1340, and input ends of M phase shifters 1340 coupled to a same wavelength division multiplexer 1350 are respectively coupled to different beam splitters 1330.

In an example, the N phase shifter groups are referred to as a phase shifter group 1 to a phase shifter group N. Each group includes M phase shifters 1340. For ease of distinguishing, M phase shifters 1340 included in the phase shifter group 1 are referred to as a phase shifter 1340-1-1 to a phase shifter 1340-1-M; M phase shifters 1340 included in a phase shifter group 2 are referred to as a phase shifter 1340-2-1 to a phase shifter 1340-2-M; and by analogy, M phase shifters 1340 included in the phase shifter group N are referred to as a phase shifter 1340-N-1 to a phase shifter 1340-N-M. In FIG. 13, the phase shifter 1340-1-1 to the phase shifter 1340-1-M in the phase shifter group 1 are coupled to an input end of a wavelength division multiplexer 1350-1; the phase shifter 1340-2-1 to the phase shifter 1340-2-M in the phase shifter group 2 are coupled to an input end of a wavelength division multiplexer 1350-2; and by analogy, the phase shifter 1340-N-1 to the phase shifter 1340-N-M in the phase shifter group N are coupled to an input end of a wavelength division multiplexer 1350-N. Therefore, it may be understood that each beam splitter 1330 is connected to N phase shifters. The beam splitter 1330-1 is connected to the phase shifter 1340-1-1 to the phase shifter 1340-N-1; a beam splitter 1330-2 is connected to a phase shifter 1340-1-2 to a phase shifter 1340-N-2; and by analogy, the beam splitter 1330-M is connected to the phase shifter 1340-1-M to the phase shifter 1340-N-M.

Output ends of the N wavelength division multiplexers 1350 are coupled to input ends of the N detectors 1360 in a one-to-one correspondence. Output ends of the N detectors 1360 are coupled to input ends of the N radio frequency antenna units 1370 in a one-to-one correspondence.

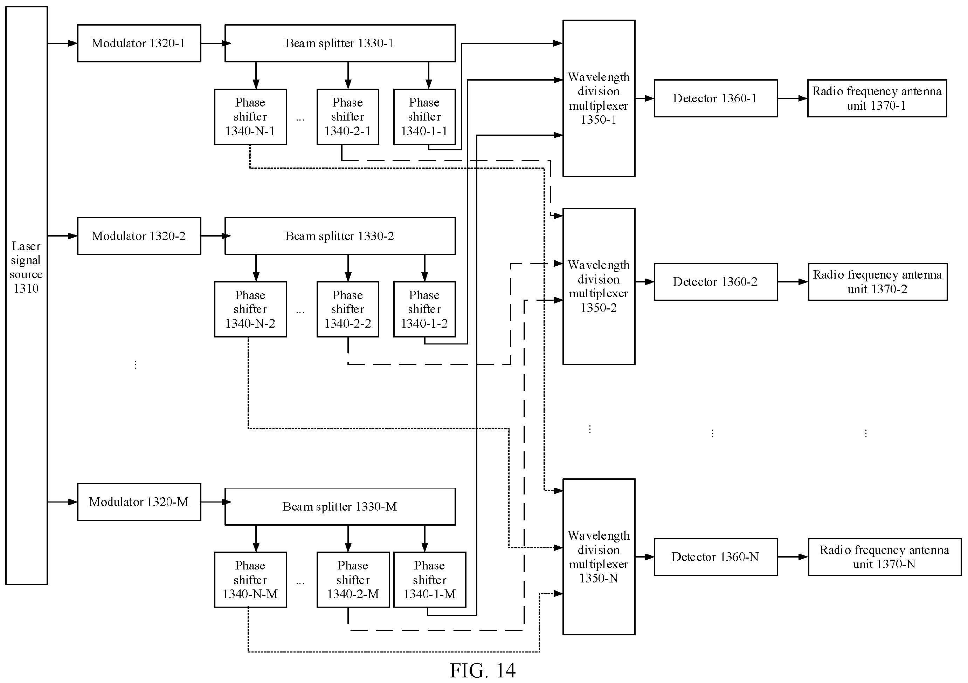

The following describes a signal flow direction of the beamforming apparatus. FIG. 14 is a diagram of a signal flow of the beamforming apparatus.

The laser signal source 1310 transmits M laser signals with different wavelengths. The M laser signals with the different wavelengths respectively correspond to wavelengths λ₁ to λ*_{M}*. The M laser signals with the different wavelengths respectively enter different modulators 1320. For example, the M different laser signals are a laser signal 1 to a laser signal M. The laser signal 1 enters the modulator 1320-1; a laser signal 2 enters a modulator 1320-2; and by analogy, the laser signal M enters the modulator 1320-M. The M modulators 1320-1 to 1320-M are in a one-to-one correspondence with the laser signal 1 to the laser signal M, and respectively receive the laser signals of the corresponding wavelengths. Each modulator 1320 modulates a radio frequency signal on a corresponding received laser signal, to obtain M first modulated optical signals. Radio frequency signals modulated on any two of the M laser signals may be the same or different. A specific radio frequency signal that is modulated may be determined based on a user requirement. The first modulated optical signals that are respectively obtained through modulation by the M modulators 1320-1 to 1320-M enter different beam splitters 1330. A first modulated optical signal obtained through modulation by the modulator 1320-1 enters the beam splitter 1330-1; a first modulated optical signal obtained through modulation by the modulator 1320-2 enters the beam splitter 1330-2; and by analogy, a first modulated optical signal obtained through modulation by the modulator 1320-M enters the beam splitter 1330-M. After receiving the first modulated optical signal, each beam splitter 1330 splits the received first modulated optical signal into N second modulated optical signals, and distributes the N second modulated optical signals to N phase shifters connected to an output end. For example, the beam splitter 1330-1 respectively distributes N second modulated optical signals to the phase shifter 1340-1-1 to the phase shifter 1340-N-1; the beam splitter 1330-2 respectively distributes N second modulated optical signals to the phase shifter 1340-1-2 to the phase shifter 1340-N-2; and by analogy, the beam splitter 1330-M respectively distributes N second modulated optical signals to the phase shifter 1340-1-M to the phase shifter 1340-N-M.

Each phase shifter 1340 performs phase adjustment on the received second modulated optical signal, and sends a third modulated optical signal obtained through adjustment to a wavelength division multiplexer 1350 coupled to the phase shifter. The phase shifter 1340-1-1 to the phase shifter 1340-1-M are coupled to the input end of the wavelength division multiplexer 1350-1, and the phase shifter 1340-1-1 to the phase shifter 1340-1-M separately send third modulated optical signals obtained through phase adjustment to the wavelength division multiplexer 1350-1. The wavelength division multiplexer 1350-1 combines the M third modulated optical signals into a fourth modulated optical signal, and sends the fourth modulated optical signal to a detector 1360-1. The detector 1360-1 performs optical-to-electrical conversion on the fourth modulated optical signal to obtain an electrical signal, and transmits the electrical signal through a radio frequency antenna unit 1370-1. The phase shifter 1340-2-1 to the phase shifter 1340-2-M are coupled to the input end of the wavelength division multiplexer 1350-2, and the phase shifter 1340-2-1 to the phase shifter 1340-2-M separately send third modulated optical signals obtained through phase adjustment to the wavelength division multiplexer 1350-2. The wavelength division multiplexer 1350-2 combines the M third modulated optical signals into a fourth modulated optical signal, and sends the fourth modulated optical signal to a detector 1360-2. The detector 1360-2 performs optical-to-electrical conversion on the fourth modulated optical signal to obtain an electrical signal, and transmits the electrical signal through a radio frequency antenna unit 1370-2. By analogy, the phase shifter 1340-N-1 to the phase shifter 1340-N-M are coupled to the input end of the wavelength division multiplexer 1350-N, and the phase shifter 1340-N-1 to the phase shifter 1340-N-M separately send third modulated optical signals obtained through phase adjustment to the wavelength division multiplexer 1350-N. The wavelength division multiplexer 1350-2 combines the M third modulated optical signals into a fourth modulated optical signal, and sends the fourth modulated optical signal to a detector 1360-N. The detector 1360-N performs optical-to-electrical conversion on the fourth modulated optical signal to obtain an electrical signal, and transmits the electrical signal through a radio frequency antenna unit 1370-N.

In this embodiment of this application, phase shifters corresponding to a same wavelength (for example, λ₁) in N paths, namely, phase shifters connected to a same beam splitter 1330, only adjust phases of optical signals whose wavelengths are λ₁ and that are obtained after the N second modulated optical signals are split, and it does not indicate that phase shifters corresponding to the wavelength λ₁ in the N paths have a same phase variation amount. Phase shift variation amounts of N phase shifters with a same wavelength in the N paths may be the same or may be different. This is not specifically limited in this embodiment of this application. For example, the phase shifter 1340-1-1, the phase shifter 1340-2-1, ..., and the phase shifter 1340-N-1 are all configured to perform phase shifting on optical signals whose wavelengths are λ₁, and phase shift variation amounts caused by the phase shifter 1340-1-1, the phase shifter 1340-2-1, ..., and the phase shifter 1340-N-1 to the optical signals whose wavelengths are λ₁ may be the same or different. Similarly, the phase shifter 1340-1-2, a phase shifter 1340-2-2, ..., and the phase shifter 1340-N-2 are all configured to perform phase shifting on optical signals whose wavelengths are λ₂, and phase shift variation amounts caused by the phase shifter 1340-1-2, the phase shifter 1340-2-2, ..., and the phase shifter 1340-N-2 to the optical signals whose wavelengths are λ₂ may be the same or different. The rest may be deduced by analogy.

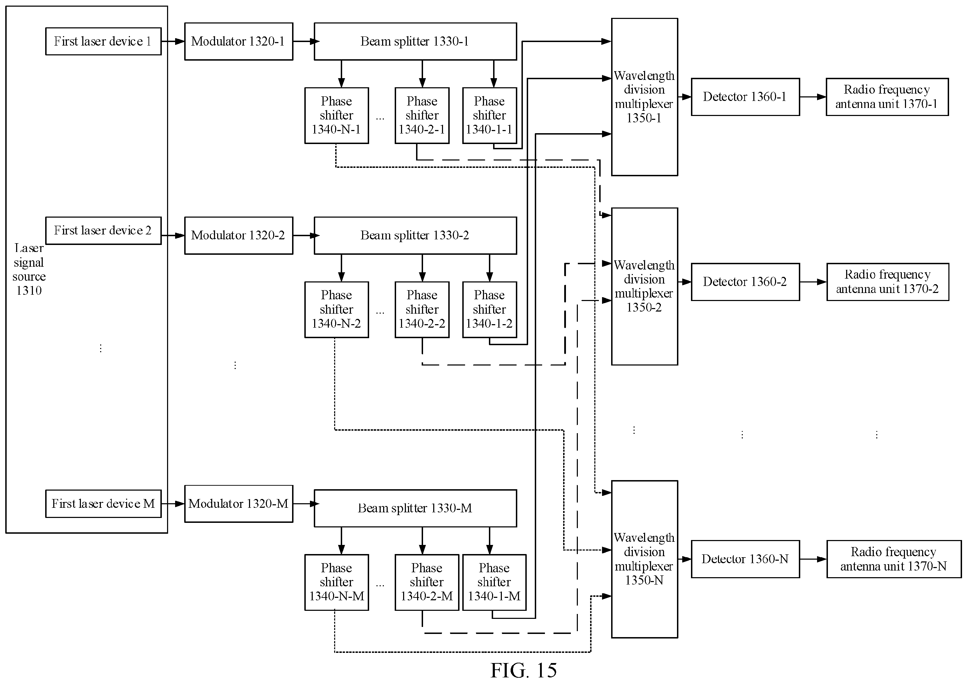

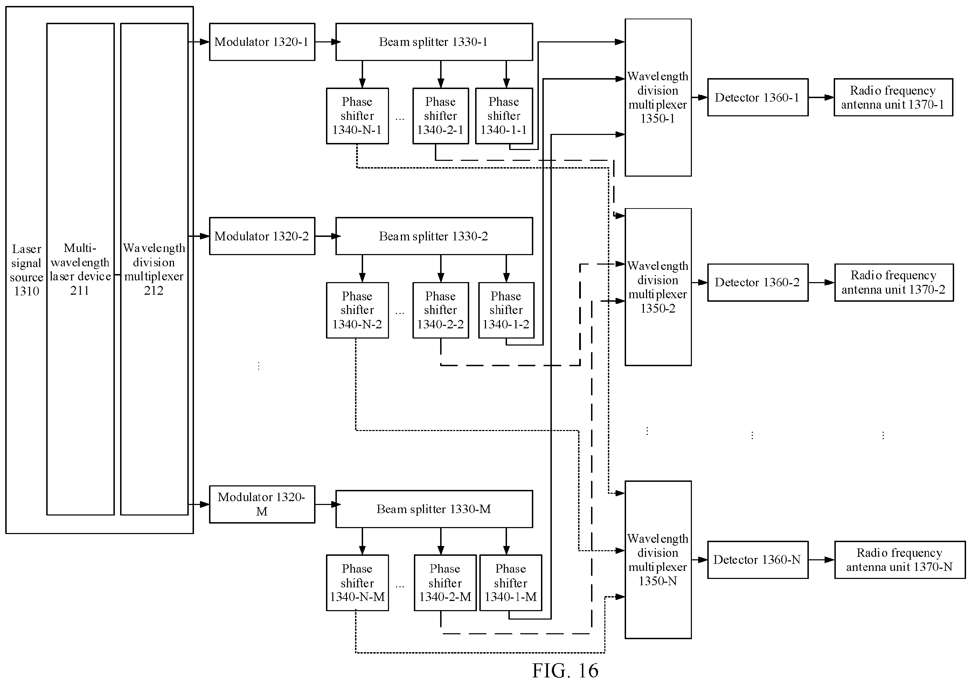

A structure of the laser signal source 1310 is similar to that of the first laser signal source 210. Details are not described herein again. Refer to FIG. 15 and FIG. 16. In this embodiment of this application, there is no specific limitation on a modulation format of the modulator 1320. For example, a coherent modulation scheme or an intensity modulation scheme may be used. In this embodiment of this application, no specific limitation is imposed on the phase shifter, and all optical devices with a phase shifting function of adjusting a phase of an optical signal are applicable to this application. Structures of the N radio frequency antenna units 1370 are similar to that of the radio frequency antenna 270. Details are not described herein again.

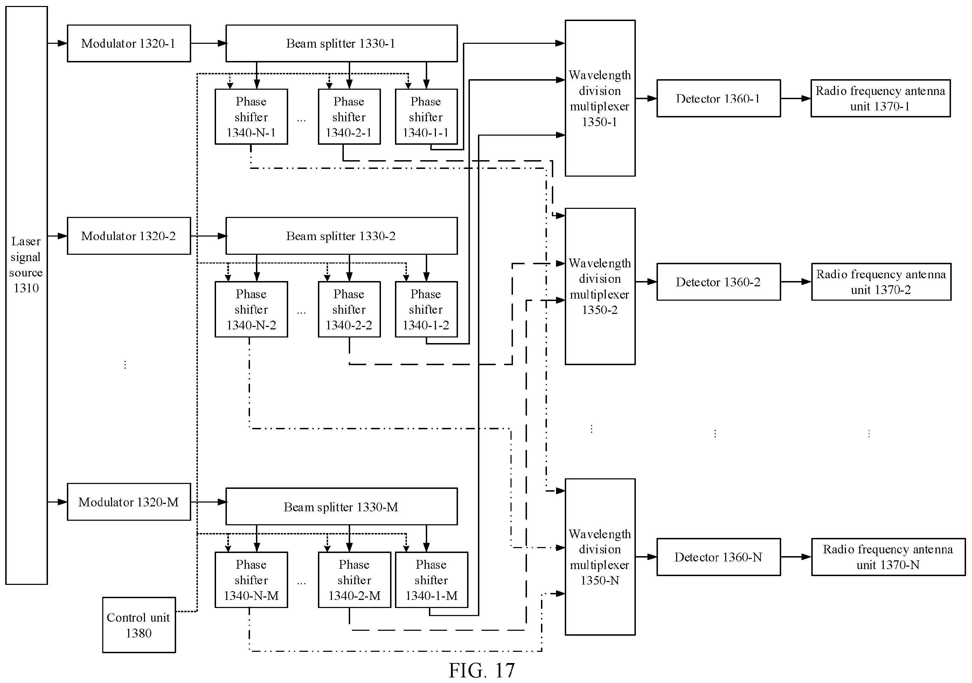

In a possible implementation, the beamforming apparatus may further include a control unit 1380. With reference to FIG. 17, the control unit 1380 may be configured to control phase shift spacings of the N*M phase shifters. For example, the control unit 1380 may control phase shift variation amounts of N phase shifters of a same wavelength in the N paths to be the same or different. For example, the control unit 1380 controls the phase shift variation amounts caused by the phase shifter 1340-1-1, the phase shifter 1340-2-1, ..., and the phase shifter 1340-N-1 to the optical signals whose wavelengths are λ₁ to be the same or different. The control unit 1380 controls the phase shift variation amounts caused by the phase shifter 1340-1-2, the phase shifter 1340-2-2, ..., and the phase shifter 1340-N-2 to the optical signals whose wavelengths are λ₂ to be the same or different. The rest may be deduced by analogy.

The control unit 1380 provided in the foregoing embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like. It should be understood that the control unit 1380 in the foregoing embodiment of this application may be implemented by one or more processors. A quantity of processors may be adjusted based on an actual application scenario. This is merely an example for description herein, and is not limited.

In this embodiment of this application, the control unit 1380 controls the phase shift variation amounts caused by the phase shifter 1340-1-1, the phase shifter 1340-2-1, ..., and the phase shifter 1340-N-1 to the optical signals whose wavelengths are λ₁, that is, may change a transmit angle of a radio frequency signal 1 at the antenna end after beamforming. The control unit 1380 controls the phase shift variation amounts caused by the phase shifter 1340-1-2, the phase shifter 1340-2-2, ..., and the phase shifter 1340-N-2 to the optical signals whose wavelengths are λ₂, that is, may change a transmit angle of a radio frequency signal 2 at the antenna end after beamforming. By analogy, the control unit 1380 may change transmit angles of radio frequency signals 1 to M at the antenna ends after beamforming, to complete beamforming. In this embodiment of this application, a quantity M of radio frequency signals that can be simultaneously transmitted is not specifically limited. The M radio frequency signals may be transmitted in a time division multiplexing manner, or may be all simultaneously transmitted, to implement full connection of the M radio frequency signals.

In a possible implementation, the beamforming apparatus may further include a memory, which is not is shown in the figure. The memory may be configured to store program instructions. The control unit 1380 may be configured to read a program instruction from the memory to control the phase shifter. In some scenarios, the memory may alternatively be deployed inside the control unit 1380. For example, the control unit 1380 includes a processor and the memory. In other words, the processor and the memory may be integrated together, or the memory and the processor may be connected through an interface, which may be adjusted based on the actual application scenario. This is not specifically limited in this embodiment of this application.

This embodiment of this application may be applied to an application scenario of direct modulation and direct detection, or may be applied to an application scenario of heterodyne or homodyne detection. For example, the beamforming apparatus described in the embodiment corresponding to FIG. 8 to FIG. 15 may be applied to the application scenario of direct modulation and direct detection.

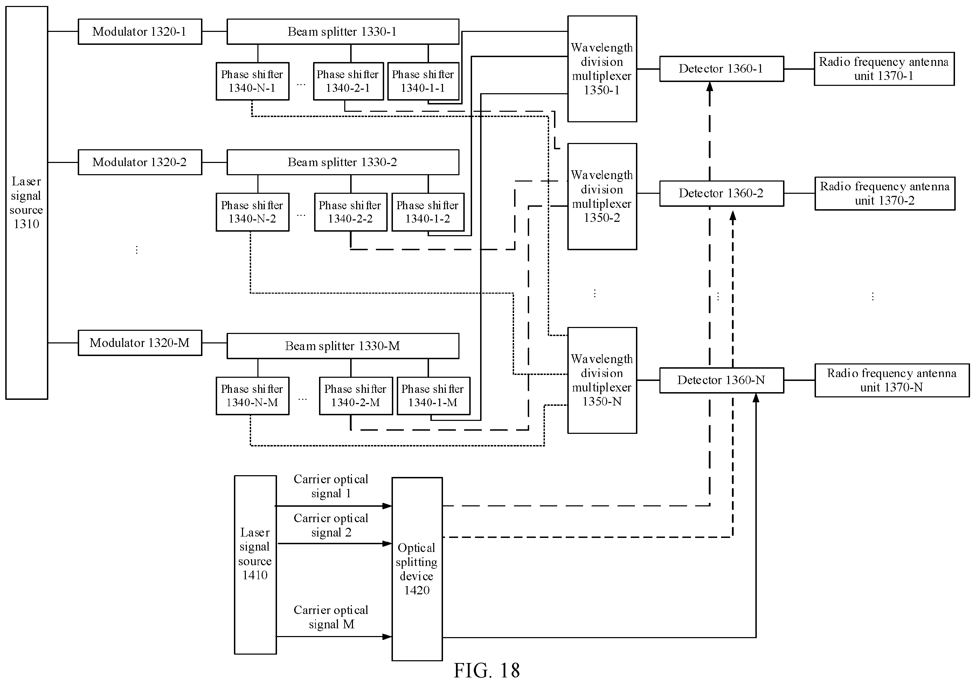

In a possible implementation, when the beamforming apparatus is applied to an application scenario of heterodyne coherent detection, the beamforming apparatus may further include a laser signal source 1410 and an optical splitting device 1420, as shown in FIG. 18. The laser signal source 1410 is configured to transmit M carrier optical signals that are in a one-to-one correspondence with the M laser signals. Wavelengths of the M carrier optical signals are the same as the wavelengths of the corresponding laser signals. The optical splitting device 1420 is configured to couple and distribute the M carrier optical signals to the N detectors 1360. Then, each of the N detectors 1360 performs coherent detection on a received fourth modulated optical signal based on received carrier optical signals, and performs optical-to-electrical conversion on the coherently detected fourth modulated optical signal to obtain an electrical signal. A structure of the laser signal source 1410 is similar to that of the second laser signal source 310. Details are not described herein again. A structure of the optical splitting device 1420 is similar to that of the second optical splitting device 320. Details are not described herein again.

In some embodiments, the laser signal source 1410 and the optical splitting device 1420 may also be deployed outside the beamforming apparatus as an independent device. When the independent device is connected to the beamforming apparatus, heterodyne coherent detection may be implemented. When the independent device is not connected to the beamforming apparatus, direct modulation and direct detection may be implemented.

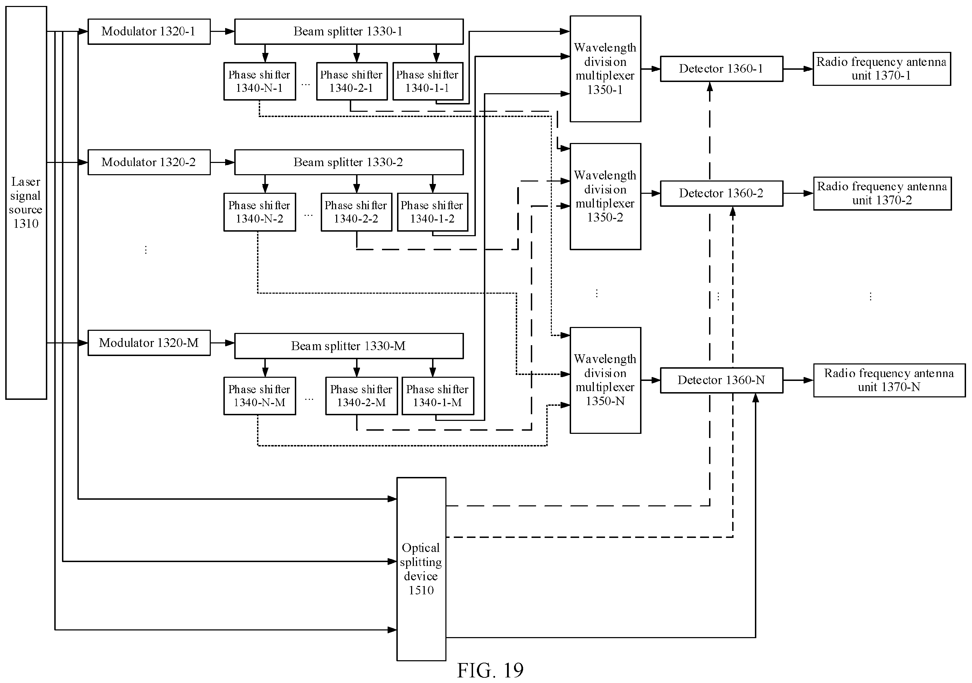

In a possible implementation, when the beamforming apparatus is applied to an application scenario of homodyne coherent detection, the beamforming apparatus may further include an optical splitting device 1510, as shown in FIG. 19. One end of the optical splitting device 1510 is coupled to the laser signal source 1310, the other end of the optical splitting device 1510 is coupled to the N detectors, and the optical splitting device 1510 is configured to couple and distribute the M laser signals to the N detectors 1360. Then, each of the N detectors 1360 performs coherent detection on a received fourth modulated optical signal based on received laser signals, performs optical-to-electrical conversion on the coherently detected fourth modulated optical signal to obtain an electrical signal, and transmits the electrical signal through the radio frequency antenna unit 1370.

In some embodiments, the optical splitting device 1510 may also be deployed outside the beamforming apparatus as an independent device. When the independent device is connected to the beamforming apparatus, homodyne coherent detection may be implemented. When the independent device is not connected to the beamforming apparatus, direct modulation and direct detection may be implemented.

There may be one or more memories in this embodiment of this application. A quantity of memories may be adjusted based on the actual application scenario. This is merely an example for description herein, and is not limited.

It should be further understood that, in this embodiment of this application, the memory, the readable storage medium, or the like described in the foregoing embodiment may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

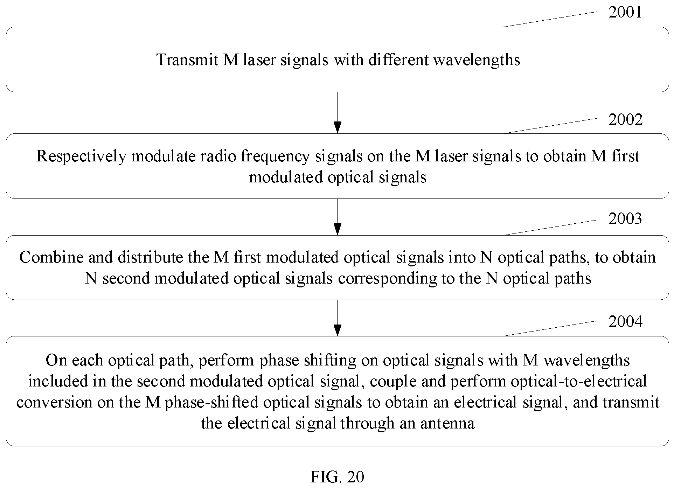

Based on the foregoing content and a same concept, this application provides a beamforming method. Refer to descriptions in FIG. 20. The beamforming method may be applied to the beamforming apparatus shown in any one of the embodiments of FIG. 2A to FIG. 12. It may also be understood that the beamforming method may be implemented based on the beamforming apparatus shown in any one of the embodiments of FIG. 2A to FIG. 12.

2001: Transmit M laser signals with different wavelengths.

For example, a first laser signal source 210 may send the M laser signals with the different wavelengths. For a structure and a specific implementation of the first laser signal source 210, refer to the foregoing descriptions. Details are not described herein again.

2002: Respectively modulate radio frequency signals on the M laser signals to obtain M first modulated optical signals, where radio frequency signals modulated on any two of the M laser signals are the same or different.

For example, M modulators 220 may respectively modulate the radio frequency signals on the M laser signals.

2003: Combine and distribute the M first modulated optical signals into N optical paths, to obtain N second modulated optical signals corresponding to the N optical paths.

For example, a first optical splitting device 230 may combine and distribute the M first modulated optical signals into the N optical paths, to obtain the N second modulated optical signals corresponding to the N optical paths.

2004: On each optical path, perform phase shifting on optical signals with M wavelengths included in the second modulated optical signal, couple and perform optical-to-electrical conversion on the M phase-shifted optical signals to obtain an electrical signal, and transmit the electrical signal through an antenna.

For example, a wavelength selection unit 240 corresponding to each optical path may respectively select the optical signals of the M wavelengths from the second modulated optical signal and send the optical signals to corresponding phase shifters for phase shifting. Then, a detector 260 couples the M phase-shifted optical signals, performs optical-to-electrical conversion to obtain the electrical signal, and transmits the electrical signal through the antenna (or referred to as an antenna element). In some embodiments, the electrical signal may be further amplified by a front-end amplifier before being sent, and then transmitted through the antenna element.

In a possible implementation, the method may further include: transmitting M carrier optical signals that are in a one-to-one correspondence with the M laser signals, and combining and splitting the M carrier optical signals into N paths of optical signals, where each of the N paths of optical signals includes M carrier optical signals. Further, coupling and performing optical-to-electrical conversion on the M phase-shifted optical signals on each path to obtain the electrical signal includes:
on each optical path, respectively performing coherent detection on the M phase-shifted optical signals based on the M received carrier optical signals, and performing optical-to-electrical conversion on the coherently detected optical signals to obtain the electrical signal.

In a possible implementation, the method may further include: coupling and splitting the M laser signals with the different wavelengths into N paths of optical signals, where each of the N paths of optical signals includes M laser signals with the different wavelengths.

Coupling and performing optical-to-electrical conversion on the M phase-shifted optical signals to obtain the electrical signal includes:
respectively performing coherent detection on the M phase-shifted optical signals based on the M received laser signals, and performing optical-to-electrical conversion on the coherently detected optical signals to obtain the electrical signal.

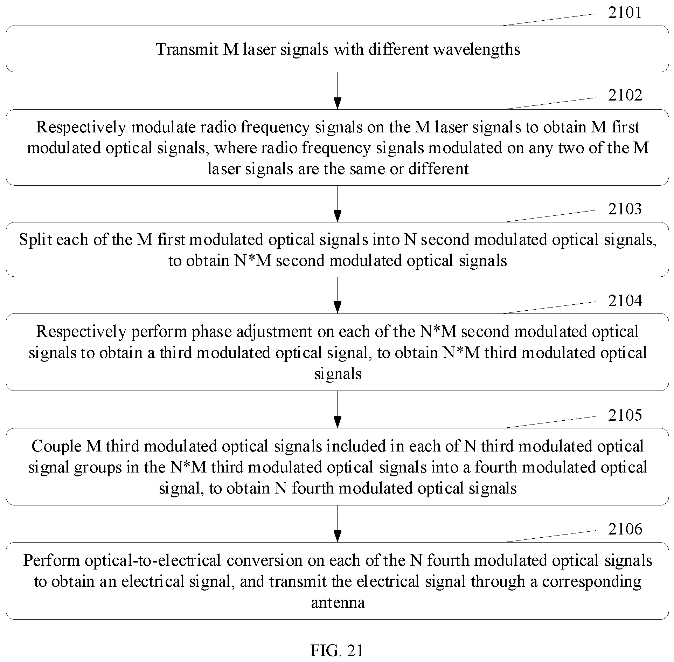

Based on the foregoing content and a same concept, this application further provides another beamforming method. Refer to descriptions in FIG. 21. The beamforming method may be applied to the beamforming apparatus shown in any one of the embodiments of FIG. 13 to FIG. 19. It may also be understood that the beamforming method may be implemented based on the beamforming apparatus shown in any one of the embodiments of FIG. 13 to FIG. 19.

2101: Transmit M laser signals with different wavelengths.

For example, a laser signal source 1310 may send the M laser signals with the different wavelengths. For a structure and a specific implementation of the laser signal source 1310, refer to the foregoing descriptions. Details are not described herein again.

2102: Respectively modulate radio frequency signals on the M laser signals to obtain M first modulated optical signals, where radio frequency signals modulated on any two of the M laser signals are the same or different.

For example, M modulators 1320 may respectively modulate the radio frequency signals on the M laser signals.

2103: Split each of the M first modulated optical signals into N second modulated optical signals, to obtain N*M second modulated optical signals.

For example, M beam splitters 1310 may respectively split the M first modulated optical signals, where each first modulated optical signal is split into N second modulated optical signals, to obtain the N*M second modulated optical signals.

2104: Respectively perform phase adjustment on each of the N*M second modulated optical signals to obtain a third modulated optical signal, to obtain N*M third modulated optical signals.

For example, N*M phase shifters 1340 may process the N*M second modulated optical signals, to obtain the N*M third modulated optical signals.

2105: Couple M third modulated optical signals included in each of N third modulated optical signal groups in the N*M third modulated optical signals into a fourth modulated optical signal, to obtain N fourth modulated optical signals. Wavelengths of the M third modulated optical signals included in each of the N third modulated optical signal groups are different.

For example, N wavelength division multiplexers 1350 may couple the M third modulated optical signals included in each of the N third modulated optical signal groups in the N*M third modulated optical signals into the fourth modulated optical signal, to obtain the N fourth modulated optical signals.

2106: Perform optical-to-electrical conversion on each of the N fourth modulated optical signals to obtain an electrical signal, and transmit the electrical signal through a corresponding antenna.

For example, N detectors 1360 may perform optical-to-electrical conversion on the N fourth modulated optical signals to obtain electrical signals, and transmit the electrical signals through antennas (or referred to as antenna elements). In some embodiments, the electrical signal may be further amplified by a front-end amplifier before being sent, and then transmitted through the antenna element.

Persons of ordinary skill in the art may understand that all or some of the steps performed by the control unit in the foregoing embodiments may be implemented by hardware or a program instructing related hardware. The program may be stored in a computer-readable storage medium. The storage medium mentioned above may be a read-only memory, a random access memory, or the like. Specifically, for example, the foregoing processing unit or processor may be a central processing unit, a general-purpose processor, a digital signal processor (DSP), an application-specific integrated circuit (ASIC), a field programmable gate array (FPGA) or another programmable logic device, a transistor logic device, a hardware component, or any combination thereof. Whether the functions are performed by hardware or software depends on particular applications and design constraints of the technical solutions. Persons skilled in the art may use different methods to implement the described functions for each particular application, but it should not be considered that the implementation goes beyond the scope of this application.

When software is used to implement the functions, all or some of the method steps described in the foregoing embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transferred from a computer-readable storage medium to another computer-readable storage medium. For example, the computer instructions may be transferred from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a BD), a semiconductor medium, or the like.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants thereof mean to cover the non-exclusive inclusion, so that a process, method, system, product, or device that includes a series of units is not necessarily limited to those units, but may include other units not expressly listed or inherent to the process, method, product, or device.

The terms used in embodiments of this application are merely for the purpose of describing specific embodiments, but are not intended to limit this application. "One" and "the" of singular forms used in embodiments of this application are also intended to include plural forms, unless the context clearly indicates another meaning. It should be further understood that, in the descriptions of this application, unless otherwise specified, "/" indicates an "or" relationship between associated objects. For example, A/B may represent A or B. "And/or" in this application describes only an association relationship between associated objects and represents that three relationships may exist. For example, A and/or B may represent the following three cases: Only A exists, both A and B exist, and only B exists. A and B may be singular or plural.

In conclusion, the foregoing embodiments are merely used to describe the technical solutions of this application, but not to limit this application. Although this application is described in detail with reference to the foregoing embodiments, persons of ordinary skill in the art should understand that they may still make modifications to the technical solutions recorded in the foregoing embodiments or make equivalent replacements to some technical features thereof, without departing from the scope of the technical solutions of embodiments of this application.

## Claims

1. A beamforming apparatus, comprising a first laser signal source, M modulators, a first optical splitting device, N wavelength selection units, and N*M phase shifters, wherein
the first laser signal source is configured to transmit M laser signals with different wavelengths;
the M modulators are in a one-to-one correspondence with the M laser signals, and are respectively configured to modulate radio frequency signals on the corresponding laser signals to obtain M first modulated optical signals, wherein radio frequency signals modulated on any two of the M laser signals are the same or different;
the first optical splitting device is coupled to the M modulators, and is configured to combine and split the M first modulated optical signals into N optical paths to obtain N second modulated optical signals corresponding to the N optical paths;
the N wavelength selection units are coupled to the first optical splitting device; the N wavelength selection units are in a one-to-one correspondence with the N second modulated optical signals; a first wavelength selection unit is configured to: receive the second modulated optical signal sent by the first optical splitting device, and send signals with M wavelengths in the second modulated optical signal to M phase shifters in a one-to-one correspondence; and the first wavelength selection unit is any one of the N wavelength selection units; and
the M phase shifters are respectively configured to: adjust phases of the received optical signals, and send the phase-adjusted optical signals to the first wavelength selection unit; and the first wavelength selection unit is further configured to fuse the received optical signals from the corresponding M phase shifters to obtain a third modulated optical signal.

2. The beamforming apparatus according to claim 1, wherein the wavelength selection unit is a reconfigurable optical differential multiplexer ROADM.

3. The beamforming apparatus according to claim 1 or 2, wherein the beamforming apparatus further comprises:
a control unit, configured to control phase shift spacings of the N*M phase shifters.

4. The beamforming apparatus according to any one of claims 1 to 3, wherein the first laser signal source comprises M first laser devices, and the M first laser devices are coupled to the M modulators in a one-to-one correspondence; and
wavelengths of the M first laser devices are different.

5. The beamforming apparatus according to any one of claims 1 to 3, wherein the first laser signal source comprises an M-wavelength laser device and a wavelength division multiplexer, the M-wavelength laser device is coupled to the wavelength division multiplexer, and the wavelength division multiplexer is coupled to the M modulators.

6. The beamforming apparatus according to any one of claims 1 to 5, wherein the beamforming apparatus further comprises N detectors and N radio frequency antenna units, the N detectors are coupled to the N wavelength selection units in a one-to-one correspondence, and the N detectors are coupled to the N radio frequency antenna units in a one-to-one correspondence; and
the N detectors are configured to: receive third modulated optical signals sent by the corresponding wavelength selection units, perform optical-to-electrical conversion on the received third modulated optical signals to obtain electrical signals, and send the electrical signals through the radio frequency antenna units corresponding to the first detectors.

7. The beamforming apparatus according to claim 6, wherein the beamforming apparatus further comprises a second laser signal source and a second optical splitting device, wherein
the second laser signal source is configured to transmit M carrier optical signals that are in a one-to-one correspondence with the M laser signals;
the second optical splitting device is configured to couple and distribute the M carrier optical signals to the N detectors; and
each of the N detectors is specifically configured to: perform coherent detection on the received third modulated optical signal based on received carrier optical signals, and perform optical-to-electrical conversion on the coherently detected third modulated optical signal to obtain an electrical signal.

8. The beamforming apparatus according to claim 6, wherein the beamforming apparatus further comprises a third optical splitting device, wherein
one end of the third optical splitting device is coupled to the first laser signal source, the other end of the third optical splitting device is coupled to the N detectors, and the third optical splitting device is configured to couple and distribute the M laser signals to the N detectors; and
a first detector in the N detectors is specifically configured to perform coherent detection on the received third modulated optical signal based on received laser signals, and perform optical-to-electrical conversion on the coherently detected third modulated optical signal to obtain an electrical signal.

9. A beamforming apparatus, comprising a first laser signal source, M modulators, M first beam splitters, N first wavelength division multiplexers, and N*M phase shifters, wherein
the first laser signal source is configured to transmit M laser signals, wherein wavelengths of the M laser signals are different;
the M modulators are in a one-to-one correspondence with the M laser signals, and are respectively configured to modulate radio frequency signals on the corresponding laser signals to obtain M first modulated optical signals, wherein radio frequency signals modulated on any two of the M laser signals are the same or different;
the M first beam splitters are coupled to the M modulators in a one-to-one correspondence; and each of the M first beam splitters is coupled to input ends of N phase shifters, and is configured to: receive a first modulated optical signal sent by a corresponding modulator, distribute the received first modulated optical signal into N second modulated optical signals, and distribute the N second modulated optical signals to the N phase shifters in a one-to-one correspondence;
the N phase shifters are respectively configured to adjust phases of the received second modulated optical signals to obtain third modulated optical signals; and
an input end of each of the N first wavelength division multiplexers is coupled to output ends of M phase shifters, different first beam splitters are respectively coupled to input ends of M phase shifters coupled to a same first wavelength division multiplexer, and each first wavelength division multiplexer is configured to couple third modulated optical signals from the M phase shifters into a fourth modulated optical signal.

10. The beamforming apparatus according to claim 9, wherein the beamforming apparatus further comprises:
a control unit, configured to control phase shift spacings of the N*M phase shifters.

11. The beamforming apparatus according to claim 9 or 10, wherein the first laser signal source comprises M first laser devices, and the M first laser devices are coupled to the M modulators in a one-to-one correspondence; and
wavelengths of the M first laser devices are different.

12. The beamforming apparatus according to claim 9 or 10, wherein the first laser signal source comprises a multi-wavelength laser device and a second wavelength division multiplexer, the M-wavelength laser device is coupled to the second wavelength division multiplexer, and the second wavelength division multiplexer is coupled to the M modulators.

13. The beamforming apparatus according to any one of claims 9 to 12, wherein the beamforming apparatus further comprises N detectors and N radio frequency antenna units; first ends of the N detectors are coupled to second ends of the N first wavelength division multiplexers in a one-to-one correspondence, and second ends of the N detectors are coupled to the N radio frequency antenna units in a one-to-one correspondence; and each of the N detectors is configured to: receive a fourth modulated optical signal from a corresponding first wavelength division multiplexer, perform optical-to-electrical conversion on the fourth modulated optical signal to obtain an electrical signal, and send the electrical signal through a corresponding radio frequency antenna unit.

14. The beamforming apparatus according to claim 13, wherein the beamforming apparatus further comprises a second laser signal source and a second optical splitting device, wherein
the second laser signal source is configured to transmit M carrier optical signals that are in a one-to-one correspondence with the M laser signals;
the second optical splitting device is configured to couple and distribute the M carrier optical signals to the N detectors; and
each of the N detectors is specifically configured to: perform coherent detection on the received fourth modulated optical signal based on received carrier optical signals, and perform optical-to-electrical conversion on the coherently detected fourth modulated optical signal to obtain an electrical signal.

15. The beamforming apparatus according to claim 13, wherein the beamforming apparatus further comprises a third optical splitting device, wherein
one end of the third optical splitting device is coupled to the first laser signal source, the other end of the third optical splitting device is coupled to the N detectors, and the third optical splitting device is configured to couple and distribute the M laser signals to the N detectors; and
a first detector in the N detectors is specifically configured to: perform coherent detection on the received third modulated optical signal based on received laser signals, and perform optical-to-electrical conversion on the coherently detected third modulated optical signal to obtain an electrical signal.

16. A beamforming method, wherein the method comprises:
transmitting M laser signals with different wavelengths;
respectively modulating radio frequency signals on the M laser signals to obtain M first modulated optical signals, wherein radio frequency signals modulated on any two of the M laser signals are the same or different;
combining and distributing the M first modulated optical signals into N optical paths, to obtain N second modulated optical signals corresponding to the N optical paths; and
on each optical path, performing phase adjustment on optical signals with M wavelengths comprised in the second modulated optical signal, and coupling and performing optical-to-electrical conversion on the M phase-shifted optical signals to obtain an electrical signal.

17. The method according to claim 16, wherein the method further comprises:
transmitting M carrier optical signals that are in a one-to-one correspondence with the M laser signals; and
combining and splitting the M carrier optical signals into N paths of optical signals, wherein each of the N paths of optical signals comprises M carrier optical signals; and
the coupling and performing optical-to-electrical conversion on the M phase-shifted optical signals on each path to obtain an electrical signal comprises:
on each optical path, respectively performing coherent detection on the M phase-shifted optical signals based on M received carrier optical signals, and performing optical-to-electrical conversion on the coherently detected optical signals to obtain the electrical signal.

18. The method according to claim 16, wherein the method further comprises:
coupling and splitting the M laser signals with the different wavelengths into N paths of optical signals, wherein each of the N paths of optical signals comprises M laser signals with the different wavelengths; and
the coupling and performing optical-to-electrical conversion on the M phase-shifted optical signals to obtain an electrical signal comprises:
respectively performing coherent detection on the M phase-shifted optical signals based on M received laser signals, and performing optical-to-electrical conversion on the coherently detected optical signals to obtain the electrical signal.

19. A beamforming method, wherein the method comprises:
transmitting M laser signals with different wavelengths;
respectively modulating radio frequency signals on the M laser signals to obtain M first modulated optical signals, wherein radio frequency signals modulated on any two of the M laser signals are the same or different;
splitting each of the M first modulated optical signals into N second modulated optical signals, to obtain N*M second modulated optical signals;
respectively performing phase adjustment on each of the N*M second modulated optical signals to obtain a third modulated optical signal, to obtain N*M third modulated optical signals;
coupling M third modulated optical signals comprised in each of N third modulated optical signal groups in the N*M third modulated optical signals into a fourth modulated optical signal, to obtain N fourth modulated optical signals, wherein
wavelengths of the M third modulated optical signals comprised in each of the N third modulated optical signal groups are different; and
performing optical-to-electrical conversion on each of the N fourth modulated optical signals to obtain an electrical signal.

20. The method according to claim 19, wherein the method further comprises:
transmitting M carrier optical signals that are in a one-to-one correspondence with the M laser signals; and
combining and splitting the M carrier optical signals into N paths of optical signals, wherein each of the N paths of optical signals comprises M carrier optical signals; and
the performing optical-to-electrical conversion on each of the N fourth modulated optical signals to obtain an electrical signal comprises:
performing coherent detection on the received fourth modulated optical signal based on M received carrier optical signals, and performing optical-to-electrical conversion on the coherently detected fourth modulated optical signal to obtain the electrical signal.

21. The method according to claim 19, wherein the method further comprises:
coupling and splitting the M laser signals with the different wavelengths into N paths of optical signals, wherein each of the N paths of optical signals comprises M laser signals with the different wavelengths, and the N paths of optical signals are in a one-to-one correspondence with the N fourth modulated optical signals; and
the performing optical-to-electrical conversion on each of the N fourth modulated optical signals to obtain an electrical signal comprises:
performing, based on M laser signals in a first path of optical signals, coherent detection on a fourth modulated optical signal corresponding to the first path of optical signals, and performing optical-to-electrical conversion on the coherently detected optical signal to obtain an electrical signal.
